# EUROPEAN PATENT SPECIFICATION

(11) **EP 3 288 132 B1**
(45) Date of publication and mention of the grant of the patent: **01.09.2021**
(21) Application number: 16863531.6
(22) Date of filing: 21.10.2016
(51) Int. Cl.: H02H 3/087, H02H 3/02

(54) **HIGH VOLTAGE DC CIRCUIT BREAKER HAVING COUPLED INDUCTOR**
HOCHSPANNUNGS-GLEICHSTROMSCHUTZSCHALTER MIT GEKOPPELTEM INDUKTOR
DISJONCTEUR À COURANT CONTINU HAUTE TENSION AYANT UNE INDUCTANCE COUPLÉE

(30) Priority: 14.11.2015 CN 201510777642
(43) Date of publication of application: 28.02.2018
(73) Proprietor: Huazhong University of Science and Technology, Wuhan, Hubei 430074 (CN)
(72) Inventor: YUAN, Zhao, Wuhan Hubei 430074 (CN); HE, Junjia, Wuhan Hubei 430074 (CN); PAN, Yuan, Wuhan Hubei 430074 (CN); XU, Hui, Wuhan Hubei 430074 (CN); ZHAO, Wenting, Wuhan Hubei 430074 (CN); YIN, Xiaogen, Wuhan Hubei 430074 (CN)
(74) Representative: Niburska, Danuta
(86) International application number: PCT/CN2016/102894
(87) International publication number: WO 2017/080354

(56) References cited:
- WO-A1-2011/141055
- WO-A1-2015/103857
- CN-A- 103 117 528
- CN-A- 103 928 913
- CN-A- 104 638 605
- CN-A- 104 767 170
- CN-A- 105 305 371
- CN-U- 203 165 824
- CN-U- 205 160 034
- GB-A- 191 303 882
- US-A- 4 307 428

## Description

The invention belongs to the field of high-voltage direct current circuit breakers, and more particularly, to a high-voltage direct current circuit breaker comprising a coupling reactor.

Direct current transmission is the earliest power transmission mode in the history. However, since direct current transmission cannot solve key technical problems like voltage changes, direct current transmission was replaced with alternating current transmission quickly. However, in recent years, with development of power systems, demand for special power transmission techniques and progress of high-power power electronics, high-voltage direct current transmission is valued, applied and developed because of its unique advantages. Compared with alternating current transmission, high-voltage direct current transmission has the advantages that the circuit costs are economical, the two-terminal systems do not need stable operation and it is easy to regulate power, and is particularly suitable for high-voltage, high-capacity and remote transmission.

At present, more than 90 HVDC projects are put into operation in the world, with the total capacity of over 70,000MW. However, high-voltage direct current transmission systems under operation in the world are all two-terminal networks without branches because there is no available high-voltage direct current circuit breaker. This defect not only limits high-voltage direct current transmission to give play to its superiority but also restricts the building and development of multi-terminal direct current power grids.

When short circuits happen, low impedance of direct current systems causes a high rise of short-circuit current. Therefore, it must guarantee that direct current circuit breakers can solve short troubles reliably as soon as possible. Meanwhile, since direct current circuit breakers need to bear a higher transient recovery voltage during the cutting off current period, it must guarantee that branch circuits of master switches can meet higher requirements of withstanding voltage.

At present, direct current circuit breakers are mainly classified into three types: mechanical direct current circuit breakers, all-solid-state direct current circuit breakers and hybrid direct current circuit breakers combining mechanical switches and solid switches. However, there are only two kinds of direct current breakers suitable for the high-voltage field: the first kind is forced zero-crossing mechanical direct current circuit breakers and the second kind is hybrid direct current circuit breakers. As for the first kind, the reverse high-frequency current produced by pre-charged capacitance and inductance is superimposed on the direct current fault current in in number mechanical switches to produce the "artificial current zero" to extinguish electric arcs and break direct currents. The second kind was put forward by ABB and other companies and uses mechanical isolating contacts and solid-state switches. As for the first kind, the reverse zero-crossing loop structure is complicated and, if the bi-directional turn-off and reclosing functions are needed, the mechanical direct current circuit breaker will be characterized by the high investment, the large volume and the significantly increased control complexity. The hybrid direct current circuit breaker adopts IGBTs and lightning arresters to from another bypass, needs too many IGBTs in series and parallel, and is characterized by the poor reliability of structure and control, the high price and the huge volume.

For example, US 4307428 A recites a circuit breaker apparatus that includes a circuit breaker that is connected in parallel to a resistor, a capacitor, and a series circuit of a blocking capacitor and the primary winding of a transformer. The resistor has a non-linear characteristic to absorb the high voltage portion of a surge current induced at the current interruption time and the capacitor is adapted to alleviate the sharpness of the surge voltage. Furthermore, the secondary winding in the transformer is connected to a charge storage capacitor through a starting switch and polarity changeover switch.

In addition, GB 03882 AA.D. 1913 recites an apparatus for suppressing the interruption arc in electric switches that include one or a series of switch(es) connected in parallel to an oscillation circuit having an oscillation condenser and an oscillation module. The oscillation module includes a transformer and a condenser; the secondary winding of the transformer is connected in series to the oscillation condenser; the primary winding of the transformer is connected in series to the condenser; and a switch is connected in parallel to the series circuit of the primary winding of the transformer and the condenser.

In addition, CN 203165824 U recites a DC circuit breaker that includes a switch connected in parallel to an energy-absorbing module and a commutation circuit. The commutation circuit is a series circuit of a capacitor and a secondary inductance of a transformer, and the first inductance of the transformer is connected in series to the switch.

In addition, WO 2015/103857 A1 recites a DC breaking device that includes a switch connected in parallel to a lightning arrester and a commutation circuit. The commutation circuit is a series circuit of a capacitor and a resistor or a series connection of a capacitor and a parallel circuit of a resistor and a diode.

In view of the above-described problems, it is one objective of the present invention to provide a high-voltage direct current circuit breaker comprising a coupling reactor, as defined in the appended claims. On the basis of meeting the requirements of direct current systems on high-voltage direct current circuit breakers to act rapidly, cut off heavy currents and bear high voltages, the present invention solves the problem that high-voltage direct current circuit breakers cannot break currents in a bi-directional way. When cutting off high-voltage heavy currents, the present invention reduces the amount of trigger modules, lowers the circuit breaker cost significantly and reduces requirements on charging sources.

To achieve the above objective, in accordance with one embodiment of the present invention, there is provided a high-voltage direct current circuit breaker comprising a coupling reactor comprises n in number circuit breaker modules in series, an energy-absorbing and voltage-limiting module which is connected to the n in number circuit breaker modules in parallel and a trigger module which is connected to n in number circuit breaker modules in parallel. The circuit breaker module comprises a mechanical switch and a commutation branch circuit which is connected to the mechanical switch in parallel. The commutation branch circuit comprises a charging commutation module and a commutation capacitor which are connected in series in that order. The charging commutation module is configured to charge up the commutation capacitor and produces high-frequency reverse currents to cut off the mechanical switches. The energy-absorbing and voltage-limiting module is configured to absorb the energy stored in inductive elements of power systems after a fault current is cut off to protect the mechanical switches. The trigger module is connected to the charging commutation module to trigger and turn on the charging commutation module after faults. n is a positive integer which is greater than or equal to 1. The charging commutation module comprises a coupling reactor, a coupling capacitor C2, and a follow current circuit which is connected in parallel to the coupling capacitor C2. The secondary side of the coupling reactor is connected in series to the commutation capacitor; and the primary side of the coupling reactor is connected in series to the trigger module and the coupling capacitor C2.

The present invention also provides a high-voltage direct current circuit breaker comprising a coupling reactor comprises an energy-absorbing and voltage-limiting module, n in number mechanical switches connected in series, a commutation branch circuit which is connected to any one of the n in number mechanical switches in parallel and a trigger module. The commutation branch circuit comprises a charging commutation module and a commutation capacitor which are connected in series in that order. The charging commutation module is configured to charge up the commutation capacitors and produces high-frequency reverse currents to cut off the mechanical switches. The energy-absorbing and voltage-limiting module is configured to absorb the energy stored in inductive elements of power systems after a fault current is cut off to protect the mechanical switch. The trigger module is connected to the charging commutation module to trigger and turn on the charging commutation module after faults. n is a positive integer which is greater than 1. The charging commutation module comprises a coupling reactor, a coupling capacitor C2, and a follow current circuit which is connected in parallel to the coupling capacitor C2. The secondary side of the coupling reactor is connected in series to the commutation capacitor; and the primary side of the coupling reactor is connected in series to the trigger module and the coupling capacitor C2.

The present invention also provides a high-voltage direct current circuit breaker comprising a coupling reactor comprises n in number circuit breaker modules connected in series, an energy-absorbing and voltage-limiting module which is connected to every circuit breaker module in parallel and a trigger module which is connected to the n in number circuit breaker modules in parallel. The circuit breaker module comprises a mechanical switch and a commutation branch circuit which are connected to the mechanical switch in parallel. The commutation branch circuit comprises a charging commutation module and a commutation capacitor which are connected in series in that order. The charging commutation module is configured to charge up the commutation capacitor and produces high-frequency reverse currents to cut off the mechanical switches. The energy-absorbing and voltage-limiting module is configured to absorb the energy stored in inductive elements of power systems after a fault current is cut off to protect the mechanical switch. The trigger module is connected to the charging commutation module to trigger and turn on the charging commutation module after faults. n is a positive integer which is greater than 1. The charging commutation module comprises a coupling reactor, a coupling capacitor C2, and a follow current circuit which is connected in parallel to the coupling capacitor C2. The secondary side of the coupling reactor is connected in series to the commutation capacitor; and the primary side of the coupling reactor is connected in series to the trigger module and the coupling capacitor C2.

The present invention also provides a high-voltage direct current circuit breaker comprising a coupling reactor comprises n in number mechanical switches connected in series, an energy-absorbing and voltage-limiting module which is connected to the n in number circuit breaker modules in parallel, a commutation branch circuit which is connected to any one of the n in number mechanical switches in parallel and a trigger module. The commutation branch circuit comprises a charging commutation module and a commutation capacitor which are connected in series in that order. The charging commutation module is configured to charge up the commutation capacitors and produces high-frequency reverse currents to cut off the mechanical switches. The energy-absorbing and voltage-limiting module is configured to absorb the energy stored in inductive elements of power systems after a fault current is cut off to protect the mechanical switch. The trigger module is connected to the charging commutation module to trigger and turn on the charging commutation module after faults. n is a positive integer which is greater than 1. The charging commutation module comprises a coupling reactor, a coupling capacitor C2, and a follow current circuit which is connected in parallel to the coupling capacitor C2. The secondary side of the coupling reactor is connected in series to the commutation capacitor; and the primary side of the coupling reactor is connected in series to the trigger module and the coupling capacitor C2.

In a class of an embodiment of the present invention, the follow current circuit comprises a resistor R1 and a diode D1.

In a class of an embodiment of the present invention, the charging commutation module in the commutation branch circuit(s) comprises a forward charging commutation module and a reverse charging commutation module which are connected in series. The forward charging commutation module is configured to produce a reverse current in the commutation branch circuit to realize the zero-crossing turn-off of the mechanical switch(es) after a forward fault happens. The reverse charging commutation module is configured to produce a reverse current in the commutation branch circuit to realize the zero-crossing turn-off of the mechanical switch(es) after a reverse fault happens. The trigger module comprises a forward trigger module and a reverse trigger module. The forward trigger module is connected to the forward charging commutation module(s) and is configured to turn on the forward charging commutation module(s) when a forward fault happens. The reverse trigger module is connected to the reverse charging commutation module(s) and is configured to turn on the reverse charging commutation module(s) when a reverse fault happens.

In a class of an embodiment of the present invention, the charging commutation module in the commutation branch circuit(s) comprises a forward charging commutation module, and a reverse commutation module which is connected to the forward commutation module in a parallel. The forward charging commutation module is configured to produce a reverse current in the commutation branch circuit to realize the zero-crossing turn-off of the mechanical switch(es) after a forward fault happens. The reverse charging commutation module is configured to produce a reverse current in the commutation branch circuit to realize the zero-crossing turn-off of the mechanical switch(es) after a reverse fault happens. The trigger module comprises a forward trigger module and a reverse trigger module. The forward trigger module is connected to the forward charging commutation module(s) and is configured to turn on the forward charging commutation module(s) when a forward fault happens. The reverse trigger module is connected to the reverse charging commutation module(s) and is configured to turn on the reverse charging commutation module(s) when a reverse fault happens.

In a class of an embodiment of the present invention, the forward charging commutation module comprises a first coupling reactor, a first coupling capacitor C2 and a first follow current circuit which is connected to the first coupling capacitor C2. The secondary side of the first coupling reactor is connected to the commutation capacitor in series. The one end of the primary side of the first coupling reactor is grounded through the first coupling capacitor C2. The other end of the primary side of the first coupling reactor is connected to the forward trigger module. The first follow current circuit comprises a diode and a resistor which are connected in series in that order. The anode of the diode is connected to the first coupling capacitor C2. The cathode of the diode is connected to the resistor R1 in series.

In a class of an embodiment of the present invention, the reverse charging commutation module comprises a second coupling reactor, a second coupling capacitor C2 and a second follow current circuit which is connected to the second coupling capacitor in parallel. The secondary side of the second coupling reactor is connected to the commutation capacitor in series. The one end of the primary side of the second coupling reactor is grounded through the second coupling capacitor C2. The other end of the primary side of the second coupling reactor is connected to the reverse trigger module. The second follow current circuit comprises a diode and a resistor which are connected in series in that order. The cathode of the diode is connected to the second coupling capacitor C2. The anode of the diode is connected to the resistor R1 in series.

In a class of an embodiment of the present invention, the trigger module, the forward trigger module or reverse trigger module comprises a thyristor G2 and a diode D2 which are connected in antiparallel.

In a class of an embodiment of the present invention, the trigger module, the forward trigger module or reverse trigger module comprises a spark gap T.

The present disclosure provides a high-voltage direct current circuit breaker comprising a coupling reactor comprises n circuit breaker module which are connected in series and an energy-absorbing and voltage-limiting module which is connected to the n in number circuit breaker modules in parallel. n is a positive integer which is greater than or equal to 1. The circuit breaker module comprises a mechanical switch and a commutation branch circuit which are connected in parallel. The commutation branch circuit comprises a charging commutation module and a commutation capacitor which are connected in series. The charging commutation module comprises a coupling reactor whose secondary side is connected to the commutation branch circuit, a coupling capacitor which is connected to the primary side of the coupling reactor in series, and a follow current circuit which is connected to the coupling capacitor in parallel. The charging commutation module provides a reverse current for the branch circuit of the circuit breaker to form the current zero through superposition. When a reverse fault happens, the charging commutation module charges the commutation capacitor, and works with the commutation capacitor together to produce a reverse high-frequency oscillating current to provide the current zero for the mechanical switch. The trigger switch is configured to turn on the charging commutation module after fault detection.

In order to guarantee better modularization of high-voltage direct current circuit breakers, the present disclosure provides the second kind of high-voltage direct current circuit breaker comprising a coupling reactor comprises n in number circuit breaker modules connected in series, an energy-absorbing and voltage-limiting module which is connected to the n in number circuit breaker modules in parallel, and a trigger switch. n is a positive integer which is greater than or equal to 1. The circuit breaker module comprises a mechanical switch and a commutation branch which are connected in parallel. The commutation branch circuit comprises a forward charging commutation module, a reverse charging commutation module and a commutation capacitor which are connected in series. The forward charging commutation module comprises a coupling reactor whose secondary side is connected to the commutation branch circuit, a coupling capacitor which is connected to the primary side of the coupling reactor in series and a follow current circuit which is connected to the coupling capacitor in parallel. The reverse charging commutation module comprises a coupling reactor whose secondary side is connected to the commutation branch circuit, a coupling capacitor of forward pre-charge which is connected to the coupling reactor in series, and a follow current circuit which is connected to the coupling capacitor in parallel. The follow current circuit comprises a diode and a resistor which are connected in series. The forward charging commutation module is configured to produce a reverse current in the commutation branch circuit through the coupling reactor to realize the zero-crossing turn-off of the circuit breaker when a forward current fault happens. The reverse charging commutation module is configured to produce a reverse current in the commutation branch circuit through the coupling reactor to realize the zero-crossing turn-off of the circuit breaker when a reverse current fault happens. The trigger switch is configured to turn on the charging commutation module after fault detection.

In order to guarantee better modularization of high-voltage direct current circuit breakers, the present disclosure provides the third kind of high-voltage direct current circuit breaker comprising a coupling reactor comprises n in number circuit breaker modules connected in series, an energy-absorbing and voltage-limiting module which is connected to the n in number circuit breaker modules in parallel, and a trigger switch. n is a positive integer which is greater than or equal to 1. The circuit breaker module comprises a mechanical switch and a commutation branch circuit which are connected in parallel. The commutation branch circuit comprises a bi-directional charging commutation module and a commutation capacitor which are connected in series. The bi-directional charging commutation module comprises a forward charging commutation module and a reverse charging commutation module which are connected in parallel. The forward charging commutation module comprises a forward coupling reactor whose secondary side is connected to the commutation branch circuit, a coupling capacitor which is connected to the primary side of the forward coupling reactor in series, and a follow current circuit which is connected to the coupling capacitor in series. The reverse charging commutation module comprises a reverse reactor whose secondary side is connected to the commutation branch circuit, a trigger switch and a coupling capacitor of forward pre-charge which are connected to the reverse coupling reactor in series, and a follow current circuit which is connected to the coupling capacitor. The follow current circuit comprises a diode and a resistor which are connected in series. The forward charging commutation module is configured to produce a reverse current to realize the zero-crossing turn-off of the circuit breaker module when a forward current fault happens. The reverse charging commutation module is configured to produce a reverse current in the commutation branch circuit through the coupling reactor when a reverse current fault happens. The trigger switch is configured to turn on the charging commutation module after fault detection.

When the system has a short circuit fault, the working principle is as follows:

When a fault is detected, the line current rises. After certain delay, the mechanical switch is turned off. When the mechanical switch is at an effective open distance, the trigger switch is turned on so the coupling capacitor starts electric discharge. When a forward current fault happens, the coupling capacitor produces a reverse current in the commutation branch circuit through the coupling reactor to realize the zero-crossing turn-off of the circuit breaker module. When a reverse current fault happens, the coupling capacitor charges the commutation capacitor through the coupling reactor. The commutation capacitor and the secondary side of the coupling reactor produce high-frequency oscillation so that the two ends of the mechanical switch realize voltage zero crossing. The mechanical switch extinguishes arc discharge and is turned off. As the current constantly flows into the commutation branch circuit, the end contact voltage of the mechanical switch constantly rises. When the voltage reaches the operation voltage of the energy-absorbing and voltage-limiting module, the current is transferred to the energy-absorbing and voltage-limiting module to consume the energy stored in the system. Therefore, the complete turn-off of fault is realized.

The present invention can flexibly meet the requirements of different voltage classes through a multi-module series connection. The present invention provides a high-voltage direct current circuit breaker comprising a coupling reactor. On the basis of meeting the requirements of direct current systems on high-voltage direct current circuit breakers to act rapidly, cut off heavy currents and bear high voltages, the present disclosure charges the commutation capacitor through the coupling branch circuit and can realize cut-off of heavy currents and bi-directional cut-off of currents. The commutation branch circuit adopts buffer capacitors to replace a great deal of power electronic devices in series. Since the devices are unitary and no voltage-sharing strategy is needed, the present invention solves the problem of poor reliability. Meanwhile, when the line voltage class rises and a plurality of charging commutation modules is needed, due to the topological property of the charging commutation modules, the charging commutation modules share a spark gap. Therefore, the present invention reduces the amount of the spark gaps when a plurality of modules is needed and substantially lowers the cost of circuit breakers.
FIG. **1** is a functional block diagram of a high-voltage direct current circuit breaker comprising a coupling reactor according to a first embodiment of the present invention;
FIG. **2** is a functional block diagram of a high-voltage direct current circuit breaker comprising a coupling reactor according to a second embodiment of the present invention;
FIG. **3** is a functional block diagram of a high-voltage direct current circuit breaker comprising a coupling reactor according to a third embodiment of the present invention;
FIG. **4** is a functional block diagram of a high-voltage direct current circuit breaker comprising a coupling reactor according to a fourth embodiment of the present invention;
FIG. **5** is a topological structure of a commutation branch circuit and a trigger module of a high-voltage direct current circuit breaker comprising a coupling reactor in the first through fourth embodiments of the present invention;
FIG. **6** is a functional block diagram of a high-voltage direct current circuit breaker comprising a coupling reactor according to a fifth embodiment of the present invention;
FIG. **7** is a functional block diagram of a high-voltage direct current circuit breaker comprising a coupling reactor according to a sixth embodiment of the present invention;
FIG. **8** is a functional block diagram of a high-voltage direct current circuit breaker comprising a coupling reactor according to a seventh embodiment of the present invention;
FIG. **9** is a functional block diagram of a high-voltage direct current circuit breaker comprising a coupling reactor according to an eighth embodiment of the present invention;
FIG. **10** is a topological structure of a commutation branch circuit and a trigger module of a high-voltage direct current circuit breaker comprising a coupling reactor in the fifth through eighth embodiments of the present invention;
FIG. **11** is a functional block diagram of a high-voltage direct current circuit breaker comprising a coupling reactor according to a ninth embodiment of the present invention;
FIG. **12** is a functional block diagram of a high-voltage direct current circuit breaker comprising a coupling reactor according to a tenth embodiment of the present invention;
FIG. **13** is a functional block diagram of a high-voltage direct current circuit breaker comprising a coupling reactor according to an eleventh embodiment of the present invention;
FIG. **14** is a functional block diagram of a high-voltage direct current circuit breaker comprising a coupling reactor according to a twelfth embodiment of the present invention;
FIG. **15** is a topological structure of a commutation branch circuit and a trigger module of a high-voltage direct current circuit breaker comprising a coupling reactor in the ninth through twelfth embodiments of the present invention;
FIG. **16** is another topological structure of a commutation branch circuit and a trigger module of a high-voltage direct current circuit breaker comprising a coupling reactor in the fifth through twelfth embodiments of the present invention;
FIG. **17** is a topological structure of a trigger module comprising a thyristor and a diode in antiparallel of a high-voltage direct current circuit breaker in accordance to one embodiment of the present invention; and
FIG. **18** is a topological structure of a trigger module comprising a spark gap of a high-voltage direct current circuit breaker in accordance to one embodiment of the present invention.

For further illustrating the invention, experiments detailing a high-voltage direct current circuit breaker comprising a coupling reactor are described hereinbelow combined with the drawings. It should be noted that the following examples are intended to describe and not to limit the invention. In addition, all technical features of the embodiments can combine with each other, provided they do not conflict with each other.

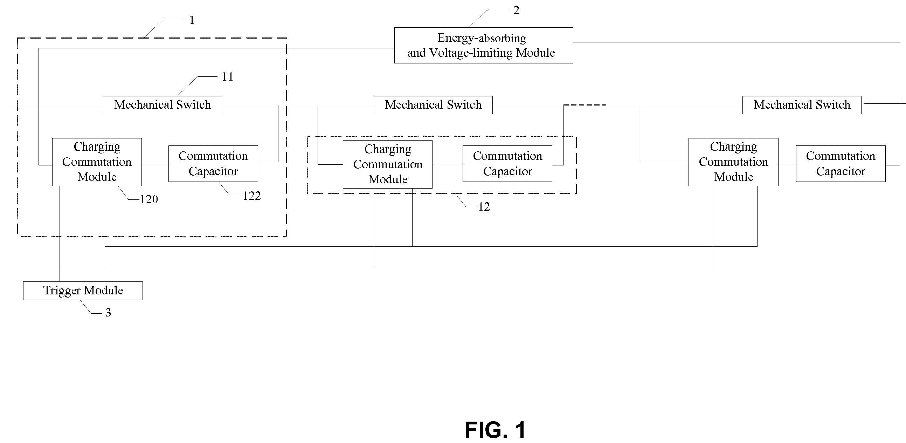

FIG. **1** is a functional block diagram of a high-voltage direct current circuit breaker comprising a coupling reactor according to a first embodiment of the present invention. For better illustration, FIG. **1** only shows the parts related to the first embodiment of the present invention in detail as follows:
A high-voltage direct current circuit breaker comprising a coupling reactor comprises n in number circuit breaker modules **1** which are connected in series, an energy-absorbing and voltage-limiting module **2** which is connected to every circuit breaker module in parallel, and a trigger module **3** which is connected to the charging commutation module in parallel. n is a positive integer which is greater than or equal to 1. The circuit breaker module **1** comprises a mechanical switch **11** and a commutation branch circuit **12** which are connected in parallel. The commutation branch circuit **12** comprises a charging commutation module **120** and a commutation capacitor **122** which are connected in series in that order. The charging commutation module **120** in the commutation branch circuit **12** is configured to work with the commutation capacitor **122** together to extinguish arc discharge and turn off the circuit breaker module **1** after a fault happens. The commutation capacitor **122** is configured to work with the secondary side of the coupling reactor in the charging commutation module **120** to produce a high-frequency oscillating current to extinguish the arc discharge of the mechanical switch. The trigger module **3** can be an anti-parallel diode or spark gap of thyristor and is configured to turn on the charging commutation module **12** when a fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

The high-voltage direct current circuit breaker comprising a coupling reactor provided by the first embodiment of the present disclosure can cut off a heavier current through a multi-module connection. Meanwhile, through the coupling reactor, the primary sides of a plurality of charging commutation modules share a trigger switch, and the single trigger switch triggers a plurality of charging commutation modules at the same time. Therefore, the present disclosure reduces the amount of trigger switches of multi-module circuit breakers greatly, saves costs and also makes control easier. In addition, the application of the charging commutation module provides a bi-directional turn-off function for circuit breakers.

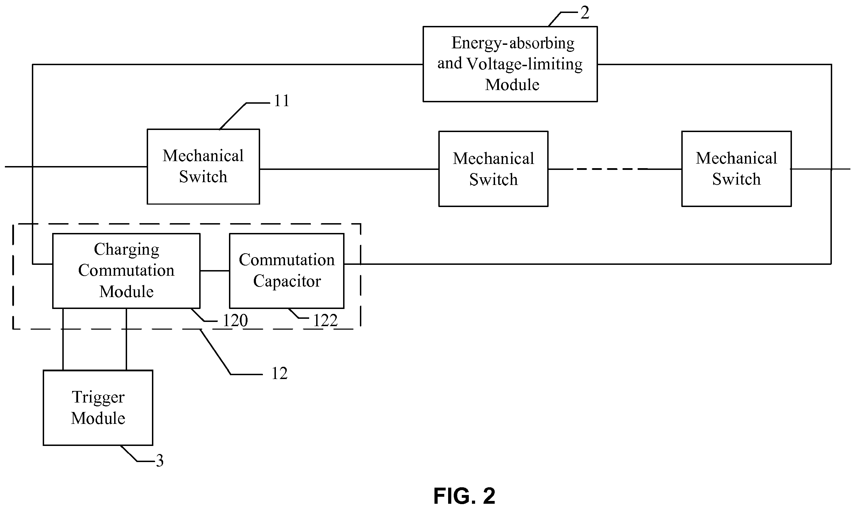

FIG. **2** is a functional block diagram of a high-voltage direct current circuit breaker comprising a coupling reactor according to a second embodiment of the present invention. For better illustration, FIG. **2** only shows the parts related to the second embodiment in detail as follows:
A high-voltage direct current circuit breaker comprising a coupling reactor comprises n in number mechanical switches **11** which are connected in series, an energy-absorbing and voltage-limiting module **2** which is connected to the n in number circuit breaker modules in parallel, a commutation branch circuit **12** which is connected to the n in number mechanical switches **11** in parallel and a trigger module **3.** n is a positive integer which is greater than or equal to **1.** The commutation branch circuit **12** comprises a charging commutation module **120** and a commutation capacitor **122** which are connected in series in that order. The charging commutation module **120** in the commutation branch circuit **12** is configured to work with the commutation capacitor **122** together to extinguish arc discharge and turn off the mechanical switches **11** after a fault happens. The commutation capacitor **122** is configured to work with the secondary side of the coupling reactor in the charging commutation module **121** to produce a high-frequency oscillating current to extinguish the arc discharge of the mechanical switch. The trigger module **3** is connected to the trigger control terminal of the charging commutation module **120.** The trigger module **3** can be a trigger switch and is configured to turn on the charging commutation module **12** when a fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

As for a high-voltage direct current circuit breaker comprising a coupling reactor provided by the second embodiment, a plurality of mechanical switches shares a commutation branch circuit. When the voltage is not very high, the second embodiment can reduce the amount of commutation branch circuits and make the circuit structure simpler. In addition, the application of the charging commutation module provides a bi-directional turn-off function for circuit breakers.

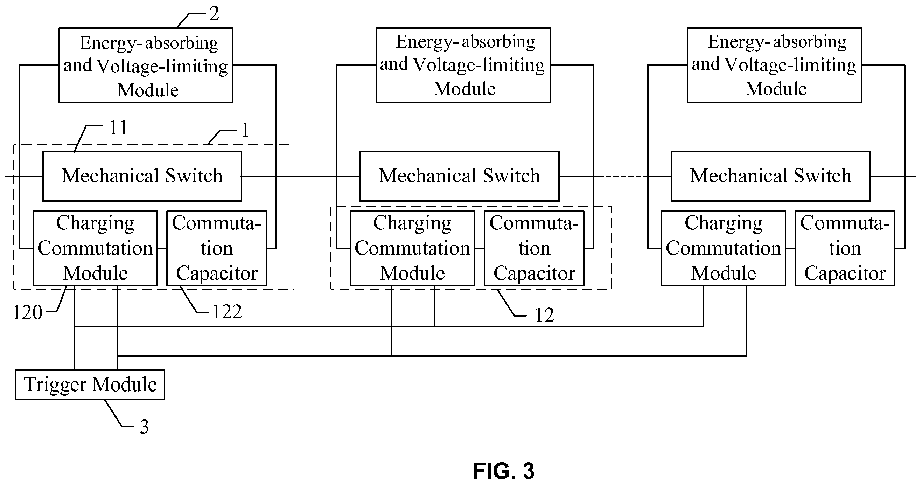

FIG. **3** is a functional block diagram of a high-voltage direct current circuit breaker comprising a coupling reactor according to a third embodiment of the present invention. For better illustration, FIG. **3** only shows the parts related to the third embodiment in detail as follows:
A high-voltage direct current circuit breaker comprising a coupling reactor comprises n in number circuit breaker modules **1** which are connected in series, n energy-absorbing and voltage-limiting modules **2** which are connected to the circuit breakers in parallel, and n trigger modules **3** which are connected to the charging commutation module in parallel. n is a positive integer which is greater than or equal to 1. The circuit breaker module **1** comprises a mechanical switch **11** and a commutation branch circuit **12** which are connected in parallel. The commutation branch circuit **12** comprises a charging commutation module **120** and a commutation capacitor **122** which are connected in series in that order. The charging commutation module **120** in the commutation branch circuit **12** is configured to work with the commutation capacitor **122** together to extinguish arc discharge and turn off the circuit breaker **11** after a fault happens. The commutation capacitor **122** is configured to work with the secondary side of the coupling reactor in the charging commutation module **120** to produce a high-frequency oscillating current to extinguish the arc discharge of the mechanical switch. The trigger module 3 can be a trigger switch and is configured to turn on the charging commutation module **12** when a fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

A high-voltage direct current circuit breaker comprising a coupling reactor provided by the third embodiment can cut off a heavier current through a multi-module connection. Meanwhile, through the coupling reactor, the primary sides of a plurality of charging commutation modules share a trigger switch, and the single trigger switch triggers a plurality of charging commutation modules at the same time. Therefore, the present invention reduces the amount of trigger switches of multi-module circuit breakers greatly, saves costs and also makes control easier. In addition, the application of the charging commutation module provides a bi-directional turn-off function for circuit breakers.

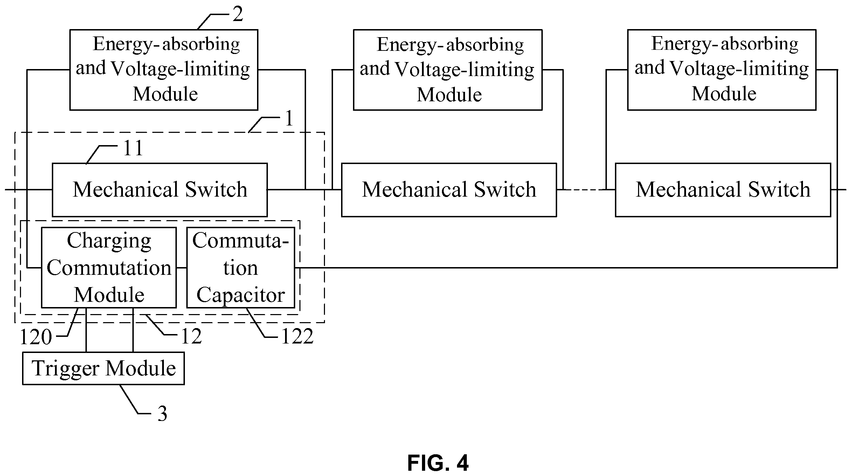

FIG. **4** is a functional block diagram of a high-voltage direct current circuit breaker comprising a coupling reactor according to a fourth embodiment of the present invention. For better illustration, FIG. 4 only shows the parts related to the fourth embodiment in detail as follows:
A high-voltage direct current circuit breaker comprising a coupling reactor comprises n in number mechanical switches **11** which are connected in series, an energy-absorbing and voltage-limiting module **2** which is connected to every mechanical switch in parallel, a commutation branch circuit **12** which is connected to the n in number mechanical switches **11** in parallel and a trigger module **3.** n is a positive integer which is greater than or equal to 1. The commutation branch circuit **12** comprises a charging commutation module **120** and a commutation capacitor **122** which are connected in series in that order. The charging commutation module **120** in the commutation branch circuit **12** is configured to work with the commutation capacitor **122** together to extinguish arc discharge and turn off the circuit breaker **11** after a fault happens. The commutation capacitor **122** is configured to work with the secondary side of the coupling reactor in the charging commutation module **121** to produce a high-frequency oscillating current to extinguish the arc discharge of the mechanical switch. The trigger module **3** is connected to the charging commutation module **120.** The trigger module **3** can be a trigger switch and is configured to turn on the charging commutation module **12** when a fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

As for a high-voltage direct current circuit breaker comprising a coupling reactor provided by the fourth embodiment, a plurality of mechanical switches shares a commutation branch circuit. When the voltage is not very high, the fourth embodiment can reduce the amount of commutation branch circuits and make the circuit structure simpler. In addition, the application of the charging commutation module provides a bi-directional turn-off function for circuit breakers.

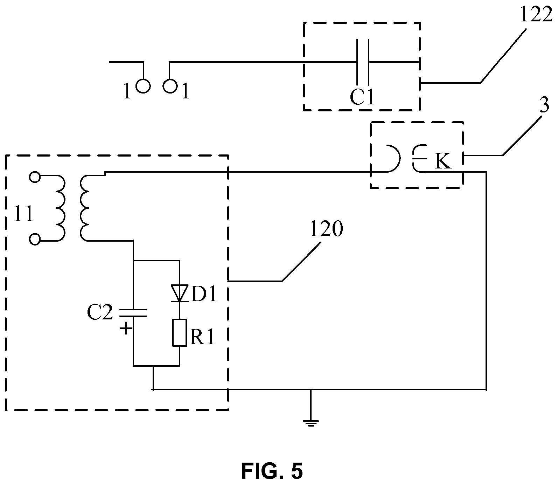

FIG. **5** is a topological structure of the commutation branch circuit and trigger module of a high-voltage direct current circuit breaker comprising a coupling reactor provided by the first through fourth embodiments of the present invention. For better illustration, FIG. **5** only shows the parts related to the first through fourth embodiments in detail as follows:
The charging commutation module **120** and the commutation capacitor **122** are connected in series. The charging commutation module **120** comprises a coupling reactor whose secondary side is connected to the commutation capacitor, a coupling capacitor **C2** which is connected to the primary side of the coupling reactor in series, and a follow current circuit which is connected to the coupling capacitor **C2** in parallel. The follow current circuit comprises a resistor **R1** and a diode **D1** which are connected in series and is configured to limit the voltage direction of the two ends of the coupling capacitor to prevent the reverse charging of the coupling capacitor. The trigger module **3** is connected to the primary side of the coupling reactor in series.

When a fault happens, the line current rises. After certain delay, the mechanical switch is turned off. When the mechanical switch is at an effective open distance, the trigger switch is turned on so the coupling capacitor starts electric discharge. When a forward current fault happens, the coupling capacitor produces a reverse current in the commutation branch circuit through the coupling reactor to realize the zero-crossing turn-off of the circuit breaker module. When a reverse current fault happens, the coupling capacitor charges the commutation capacitor through the coupling reactor. The commutation capacitor and the secondary side of the coupling reactor produce high-frequency oscillation so that the two ends of the mechanical switch realize voltage zero crossing. The mechanical switch extinguishes arc discharge and is turned off. As the current constantly flows into the commutation branch circuit, the end contact voltage of the mechanical switch constantly rises. When the voltage reaches the operation voltage of the energy-absorbing and voltage-limiting module, the current is transferred to the energy-absorbing and voltage-limiting module to consume the energy stored in the system. Therefore, the complete turn-off of fault is realized.

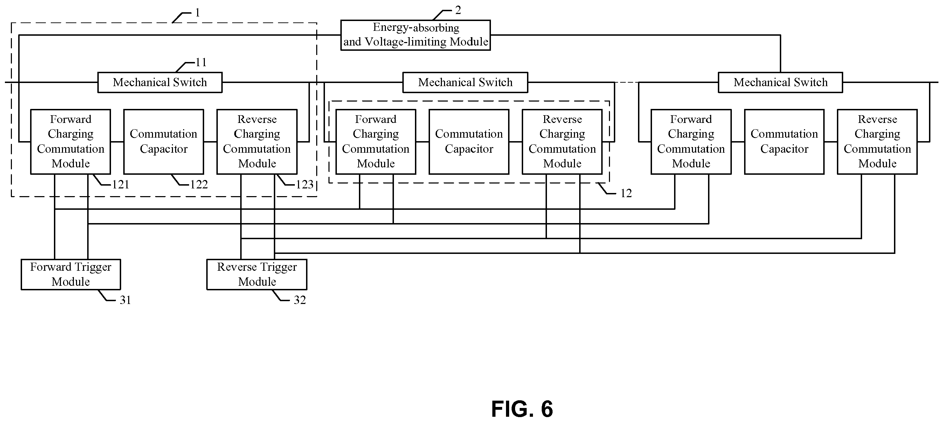

FIG. **6** is a functional block diagram of a high-voltage direct current circuit breaker comprising a coupling reactor according to a fifth embodiment of the present invention. For better illustration, FIG. 6 only shows the parts related to the embodiment in detail as follows:
A high-voltage direct current circuit breaker comprising a coupling reactor comprises n in number circuit breaker modules **1** which are connected in series, an energy-absorbing and voltage-limiting module **2** which is connected to every circuit breaker **1** in parallel, a forward trigger module **31** and a reverse trigger module **32.** n is a positive integer which is greater than or equal to 1. Every circuit breaker module **1** comprises a mechanical switch **11** and a commutation branch circuit **12** which is connected to the mechanical switch **11** in parallel. The commutation branch circuit **12** comprises a forward charging commutation module **121,** a commutation capacitor **122** and a reverse charging commutation module **123** which are connected in series in that order. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is connected to the forward charging commutation modules **121** of the n in number circuit breaker modules 1 in parallel. The forward trigger module **31** is configured to turn on the forward charging commutation module **121** when a forward fault happens. The reverse trigger module **32** is connected to the reverse charging commutation modules **123** of the n in number circuit breaker modules **1** in parallel. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

The high-voltage direct current circuit breaker comprising a coupling reactor provided by the fifth embodiment can cut off a heavier current through a multi-module connection. Meanwhile, through the coupling reactor, the primary sides of a plurality of charging commutation modules with the same direction share a trigger switch, and two trigger switches trigger a plurality of charging commutation modules at the same time. Therefore, the present invention reduces the amount of trigger switches of multi-module circuit breakers greatly, saves costs and also makes control easier. In addition, the application of the charging commutation module provides a bi-directional turn-off function for circuit breakers.

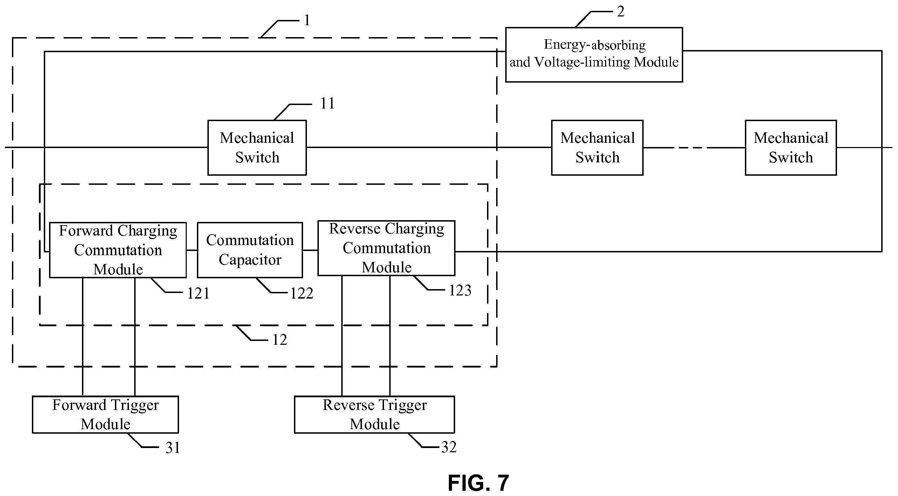

FIG. **7** is a functional block diagram of a high-voltage direct current circuit breaker comprising a coupling reactor according to a sixth embodiment of the present invention. For better illustration, FIG. **7** only shows the parts related to the embodiment in detail as follows:
The high-voltage direct current circuit breaker comprising a coupling reactor comprises n in number mechanical switches **11** which are connected in series, an energy-absorbing and voltage-limiting module **2** which is connected to the n in number mechanical switches in parallel, a commutation branch circuit **12** which is connected to any one of the n in number mechanical switches **11** in parallel, a forward trigger module **31** and a reverse trigger module **32.** n is a positive integer which is greater than or equal to 1. The commutation branch circuit **12** comprises a forward charging commutation module **121,** a commutation capacitor **122** and a reverse charging commutation module **123** which are connected in series in that order. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is connected to the forward charging commutation modules **121** in parallel. The forward trigger module **31** is configured to turn on the forward charging commutation module **121** when a forward fault happens. The reverse trigger module **32** is connected to the reverse charging commutation modules **123** in parallel. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

As for a high-voltage direct current circuit breaker comprising a coupling reactor provided by the sixth embodiment, a plurality of mechanical switches shares a commutation branch circuit. When the voltage is not very high, the sixth embodiment can reduce the amount of commutation branch circuits and make the circuit structure simpler. In addition, the application of the charging commutation module provides a bi-directional turn-off function for circuit breakers.

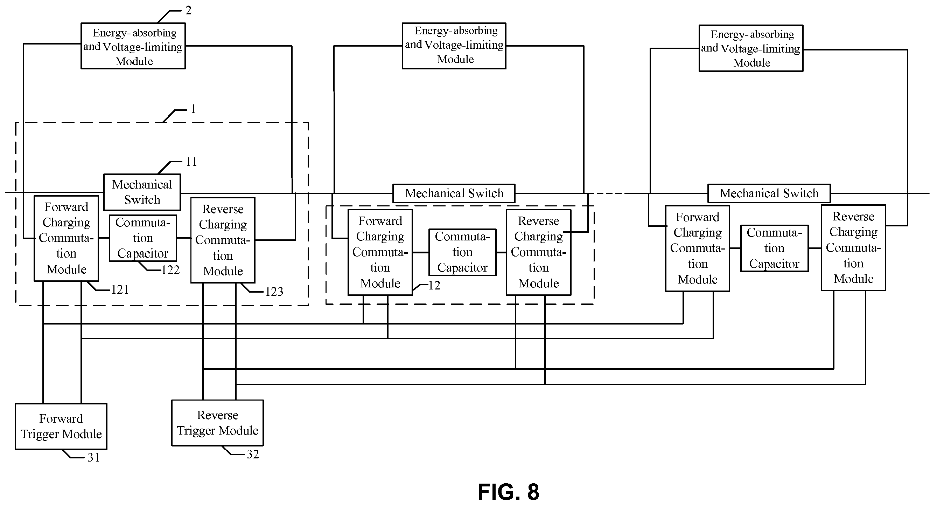

FIG. **8** is a functional block diagram of a high-voltage direct current circuit breaker comprising a coupling reactor according to a seventh embodiment of the present invention. For better illustration, FIG. **8** only shows the parts related to the embodiment in detail as follows:
The high-voltage direct current circuit breaker comprising a coupling reactor comprises n in number circuit breaker modules **1** which are connected in series, an energy-absorbing and voltage-limiting module **2** which is connected to every circuit breaker **1** in parallel, a forward trigger module **31** and a reverse trigger module **32.** n is a positive integer which is greater than or equal to 1. Every circuit breaker module **1** comprises a mechanical switch **11** and a commutation branch circuit **12** which is connected to the mechanical switch **11** in parallel. The commutation branch circuit **12** comprises a forward charging commutation module **121,** a commutation capacitor **122** and a reverse charging commutation module **123** which are connected in series in that order. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is connected to the forward charging commutation modules **121** of the n in number circuit breaker modules **1** in parallel. The forward trigger module **31** is configured to turn on the forward charging commutation module **121** when a forward fault happens. The reverse trigger module **32** is connected to the reverse charging commutation modules **123** of the n in number circuit breaker modules 1 in parallel. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

The high-voltage direct current circuit breaker comprising a coupling reactor provided by the seventh embodiment can cut off a heavier current through a multi-module connection. Meanwhile, through the coupling reactor, the primary sides of a plurality of charging commutation modules with the same direction share a trigger switch, and two trigger modules trigger a plurality of charging commutation modules at the same time. Therefore, the present invention reduces the amount of trigger switches of multi-module circuit breakers greatly, saves costs and also makes control easier. In addition, the application of the charging commutation module provides a bi-directional turn-off function for circuit breakers.

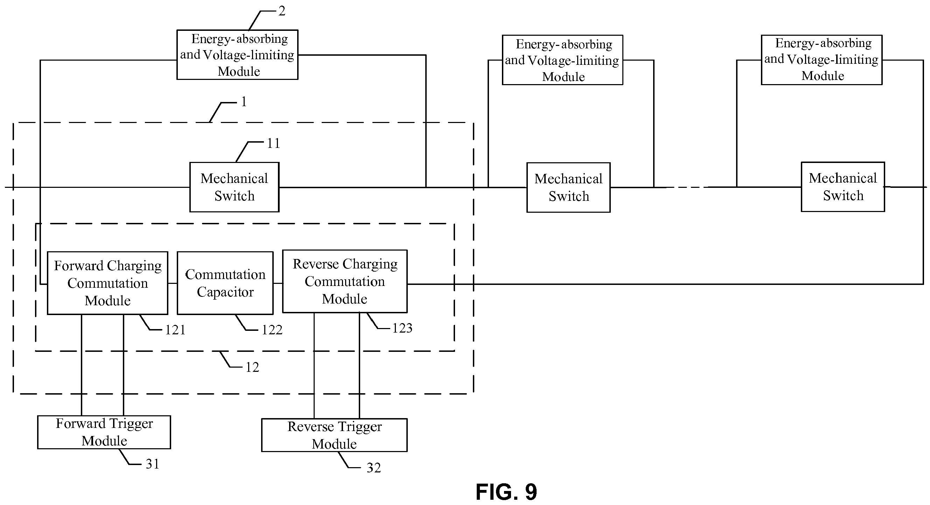

FIG. **9** is a functional block diagram of a high-voltage direct current circuit breaker comprising a coupling reactor according to an eighth embodiment of the present invention. For better illustration, FIG. **9** only shows the parts related to the embodiment in detail as follows:
The high-voltage direct current circuit breaker comprising a coupling reactor comprises n in number mechanical switches **11** which are connected in series, n energy-absorbing and voltage-limiting modules which are connected to the mechanical switches in parallel, a commutation branch circuit **12** which is connected to the n in number mechanical switches **11** in parallel, a forward trigger module **31** and a reverse trigger module **32.** n is a positive integer which is greater than or equal to 1. The commutation branch circuit **12** comprises a forward charging commutation module **121,** a commutation capacitor **122** and a reverse charging commutation module **123** which are connected in series in that order. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is connected to the trigger control end of the forward charging commutation modules **121** in parallel. The forward trigger module **31** is configured to turn on the forward charging commutation module **121** when a forward fault happens. The reverse trigger module **32** is connected to the reverse charging commutation modules **123** in parallel. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

As for the high-voltage direct current circuit breaker comprising a coupling reactor provided by the eighth embodiment, a plurality of mechanical switches shares a commutation branch circuit. When the voltage is not very high, the eighth embodiment can reduce the amount of commutation branch circuits and make the circuit structure simpler. In addition, the application of the charging commutation module provides a bi-directional turn-off function for circuit breakers.

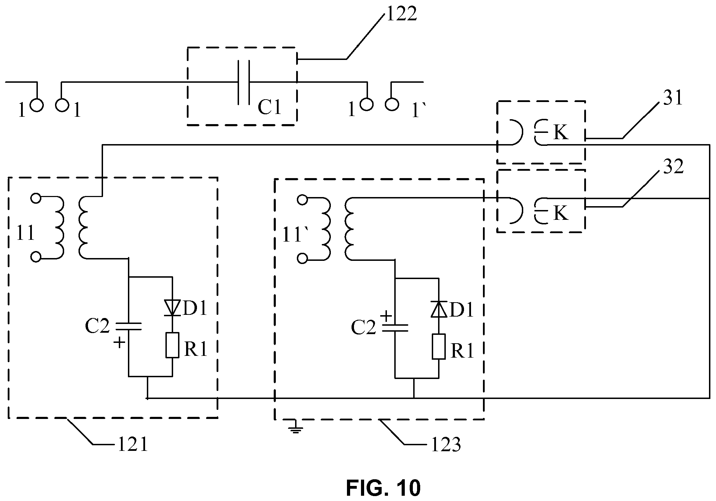

FIG. **10** is a topological structure of the commutation branch circuit and trigger module of a high-voltage direct current circuit breaker comprising a coupling reactor provided by the fifth through eighth embodiments of the present invention. For better illustration, FIG. **10** only shows the parts related to the fifth through eighth embodiments in detail as follows:
The forward charging commutation module **121,** the commutation capacitor **122,** and the reverse charging commutation module **123** are connected in series. The forward charging commutation module **121** comprises a coupling reactor whose secondary side is connected to the commutation capacitor **122,** a trigger switch and a reverse pre-charge coupling capacitor which are connected to the secondary side of the coupling reactor in series, and a follow current circuit which is connected to the coupling capacitor in parallel. The forward trigger module **31** is connected to the primary side of the coupling reactor of the forward charging commutation module **121** in parallel. The reverse charging commutation module **123** comprises a coupling reactor whose secondary side is connected to the commutation capacitor in series, a trigger switch and a forward pre-charge coupling capacitor which are connected to the secondary side of the coupling reactor in series, and a follow current circuit which is connected to the coupling capacitor in parallel. The reverse trigger module **32** is connected to the primary side of the coupling reactor of the reverse charging module in parallel. The follow current circuit comprises a resistor and a diode connected in series, and is configured to limit the voltage direction of the two ends of the coupling capacitor.

When a forward fault happens, the line current rises. After certain delay, the mechanical switch is turned off. When the mechanical switch is at an effective open distance, the forward trigger switch is turned on so the coupling capacitor of the forward charging commutation module starts electric discharge. A reverse current is produced in the commutation branch circuit through the coupling reactor. The reverse current is superimposed on the branch circuit of the mechanical switch to realize voltage zero-crossing of the two ends of the mechanical switch and then the mechanical switch extinguishes arc discharge and is turned off. As the current constantly flows into the commutation branch circuit, the end contact voltage of the mechanical switch constantly rises. When the voltage reaches the operation voltage of the energy-absorbing and voltage-limiting module, the current is transferred to the energy-absorbing and voltage-limiting module to consume the energy stored in the system. Therefore, the complete turn-off of fault is realized.

When a reverse fault happens, the line current rises. After certain delay, the mechanical switch is turned off. When the mechanical switch is at an effective open distance, the reverse trigger switch is turned on so the coupling capacitor of the reverse charging commutation module starts electric discharge. A reverse current is produced in the commutation branch circuit through the coupling reactor. The reverse current is superimposed on the branch circuit of the mechanical switch to realize voltage zero-crossing of the two ends of the mechanical switch and then the mechanical switch extinguishes arc discharge and is turned off. As the current constantly flows into the commutation branch circuit, the end contact voltage of the mechanical switch constantly rises. When the voltage reaches the operation voltage of the energy-absorbing and voltage-limiting module, the current is transferred to the energy-absorbing and voltage-limiting module to consume the energy stored in the system. Therefore, the complete turn-off of fault is realized.

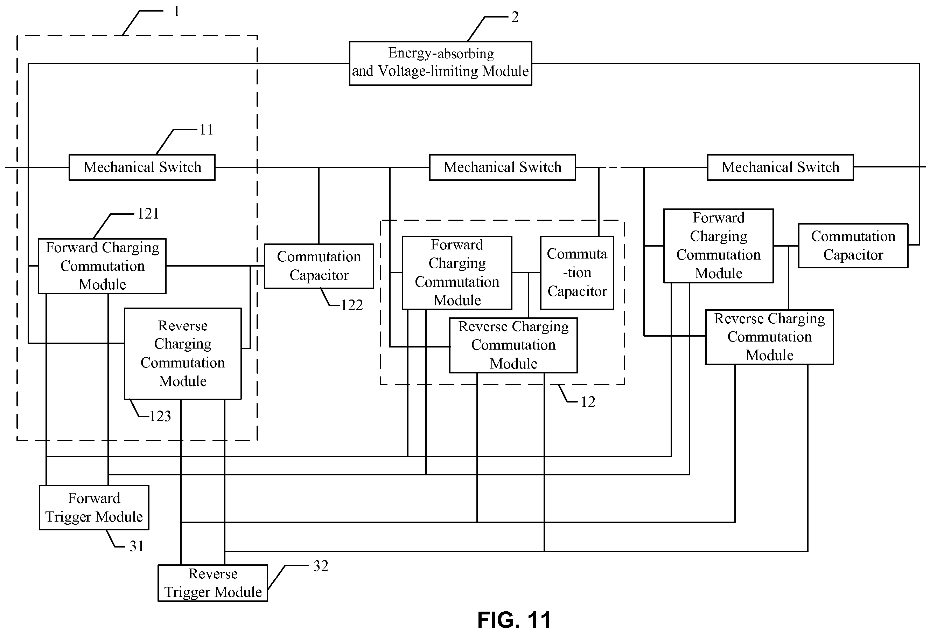

FIG. **11** is a functional block diagram of a high-voltage direct current circuit breaker comprising a coupling reactor according to a ninth embodiment of the present invention. For better illustration, FIG. **11** only shows the parts related to the embodiment in detail as follows:
A high-voltage direct current circuit breaker comprising a coupling reactor comprises n in number circuit breaker modules **1** which are connected in series, an energy-absorbing and voltage-limiting module **2** which is connected to all circuit breakers **1** in parallel, a forward trigger module **31** and a reverse trigger module **32.** n is a positive integer which is greater than or equal to 1. The circuit breaker module **1** comprises a mechanical switch **11** and a commutation branch circuit **12** which is connected to the mechanical switch **11** in parallel. The commutation branch circuit **12** comprises a forward charging commutation module **121** and a commutation capacitor **122** which are connected in series in that order, and a reverse charging commutation module **123** which is connected to the forward charging commutation module **121** in parallel. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is configured to turn on the forward charging commutation module when a forward fault happens. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

The high-voltage direct current circuit breaker comprising a coupling reactor provided by the ninth embodiment can cut off a heavier current through a multi-module connection. Meanwhile, through the coupling reactor, the primary sides of a plurality of charging commutation modules with the same direction share a trigger switch, and two trigger switches trigger a plurality of charging commutation modules at the same time. Therefore, the present invention reduces the amount of trigger switches of multi-module circuit breakers greatly, saves costs and also makes control easier. In addition, the application of the charging commutation module provides a bi-directional turn-off function for circuit breakers.

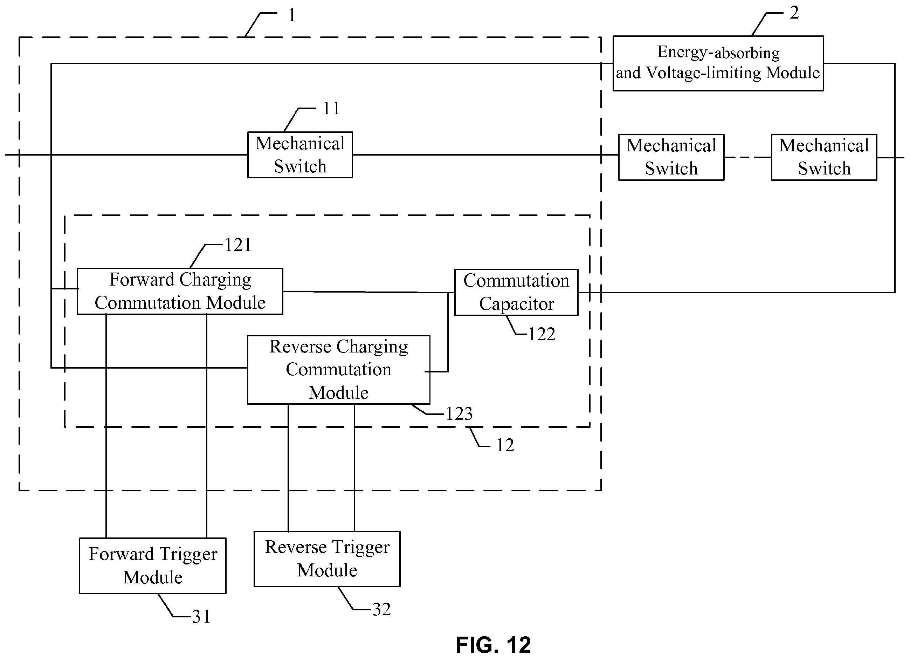

FIG. **12** is a functional block diagram of a high-voltage direct current circuit breaker comprising a coupling reactor according to a tenth embodiment of the present invention. For better illustration, FIG. **12** only shows the parts related to the embodiment in detail as follows:
A high-voltage direct current circuit breaker comprising a coupling reactor comprises n in number mechanical switches **11,** an energy-absorbing and voltage-limiting module **2** which is connected to the n in number mechanical switches in parallel, a commutation branch circuit **12** which is connected to the n in number mechanical switches in parallel, a forward trigger module **31** and a reverse trigger module **32.** n is a positive integer which is greater than or equal to 1. The commutation branch circuit **12** comprises a forward charging commutation module **121** and a commutation capacitor **122** which are connected in series in that order, and a reverse charging commutation module **123** which is connected to the forward charging commutation module **121** in parallel. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is configured to turn on the forward charging commutation module when a forward fault happens. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

As for a high-voltage direct current circuit breaker comprising a coupling reactor provided by the tenth embodiment, a plurality of mechanical switches shares a commutation branch circuit. When the voltage is not very high, the tenth embodiment can reduce the amount of commutation branch circuits and make the circuit structure simpler. In addition, the application of the charging commutation module provides a bi-directional turn-off function for circuit breakers.

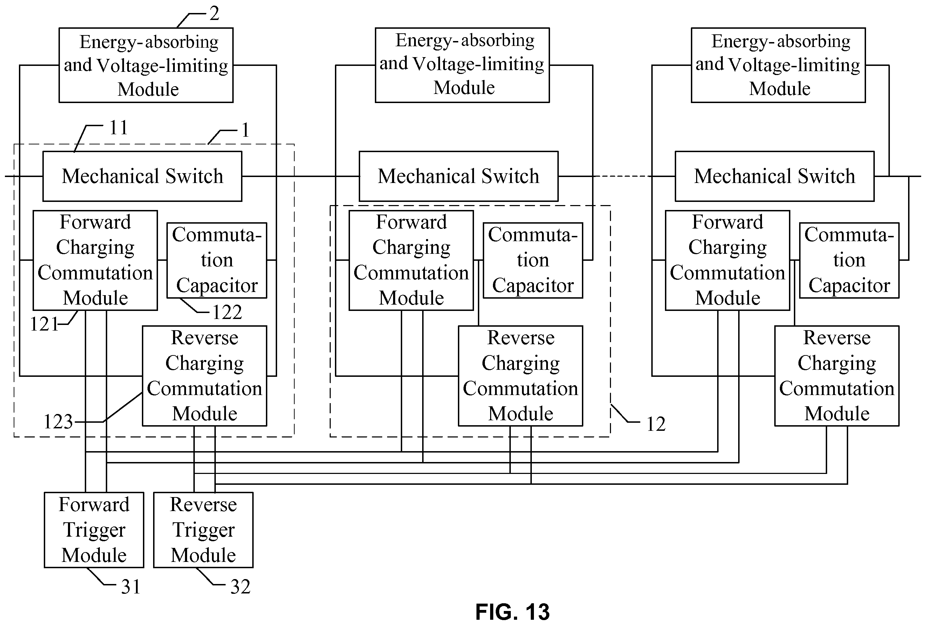

FIG. **13** is a functional block diagram of a high-voltage direct current circuit breaker comprising a coupling reactor according to an eleventh embodiment invention. For better illustration, FIG. **13** only shows the parts related to the embodiment in detail as follows:
A high-voltage direct current circuit breaker comprising a coupling reactor comprises n in number circuit breaker modules **1** which are connected in series, an energy-absorbing and voltage-limiting module **2** which is connected to every circuit breaker **1** in parallel, a forward trigger module **31** and a reverse trigger module **32.** n is a positive integer which is greater than or equal to 1. The circuit breaker module **1** comprises a mechanical switch **11** and a commutation branch circuit **12** which is connected to the mechanical switch **11** in parallel. The commutation branch circuit **12** comprises a forward charging commutation module **121** and a commutation capacitor **122** which are connected in series in that order, and a reverse charging commutation module **123** which is connected to the forward charging commutation module **121** in parallel. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is configured to turn on the forward charging commutation module when a forward fault happens. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

The high-voltage direct current circuit breaker comprising a coupling reactor provided by the eleventh embodiment of the present disclosure can cut off a heavier current through a multi-module connection. Meanwhile, through the coupling reactor, the primary sides of a plurality of charging commutation modules with the same direction share a trigger switch, and two trigger switches trigger a plurality of charging commutation modules at the same time. Therefore, the present invention reduces the amount of trigger switches of multi-module circuit breakers greatly, saves costs and also makes control easier. In addition, the application of the charging commutation module provides a bi-directional turn-off function for circuit breakers.

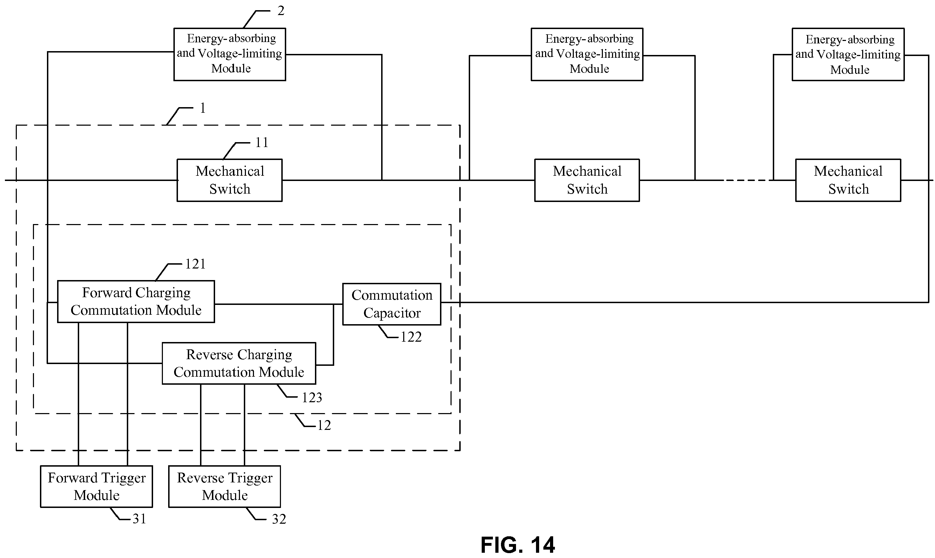

FIG. **14** is a functional block diagram of a high-voltage direct current circuit breaker comprising a coupling reactor according to a twelfth embodiment of the present invention. For better illustration, FIG. **14** only shows the parts related to the embodiment in detail as follows:
A high-voltage direct current circuit breaker comprising a coupling reactor comprises n in number mechanical switches **11,** an energy-absorbing and voltage-limiting module **2** which is connected to the n in number mechanical switches in parallel, a commutation branch circuit **12** which is connected to the n in number mechanical switches in parallel, a forward trigger module **31** and a reverse trigger module **32.** n is a positive integer which is greater than or equal to 1. The commutation branch circuit **12** comprises a forward charging commutation module **121** and a commutation capacitor **122** which are connected in series in that order, and a reverse charging commutation module **123** which is connected to the forward charging commutation module **121** in parallel. The forward charging commutation module **121** is configured to produce a reverse current in the commutation branch circuit through the coupling reactor to realize the zero-crossing turn-off of the mechanical switch after a forward fault happens. The reverse charging commutation module **123** is configured to produce a reverse current in the commutation branch circuit through the coupling reactor to realize the zero-crossing turn-off of the mechanical switch after a reverse fault happens. The forward trigger module **31** is configured to turn on the forward charging commutation module when a forward fault happens. The reverse trigger module **32** is configured to turn on the reverse charging commutation module when a reverse fault happens. The energy-absorbing and voltage-limiting module **2** can be a zinc oxide lightning arrester and is configured to absorb the energy stored in inductive elements of power system after a fault current is cut off to realize the voltage-limiting protection of the mechanical switch **11.**

As for the high-voltage direct current circuit breaker comprising a coupling reactor provided by the twelfth embodiment, a plurality of mechanical switches shares a commutation branch circuit. When the voltage is not very high, the twelfth embodiment can reduce the amount of commutation branch circuits and make the circuit structure simpler. In addition, the application of the charging commutation module provides a bi-directional turn-off function for circuit breakers.

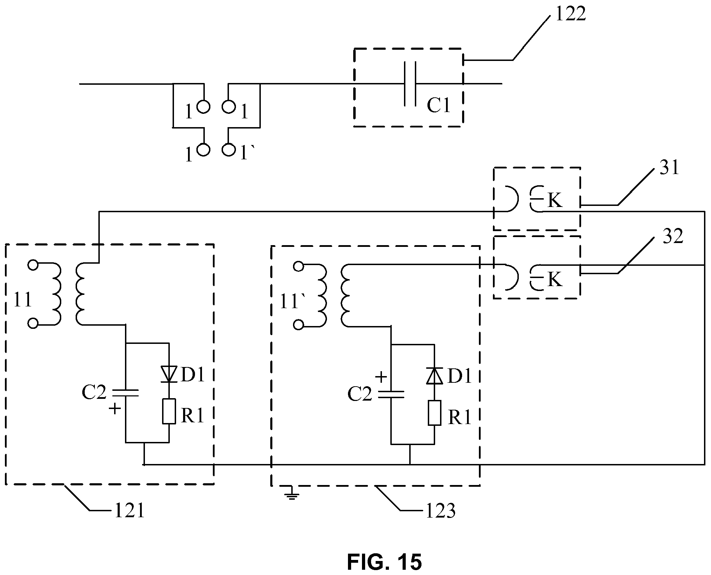

FIG. **15** is a topological structure of a commutation branch circuit and a trigger module of a high-voltage direct current circuit breaker comprising a coupling reactor provided by the ninth through twelfth embodiments of the present invention. For better illustration, FIG. **15** only shows the parts related to the ninth through twelfth embodiments in detail as follows:
The forward charging commutation module **121** is connected to the reverse charging commutation module **123** in parallel and then with the commutation capacitor **122** in series. The forward charging commutation module comprises a coupling reactor whose secondary side is connected to the commutation capacitor, a trigger switch and a reverse pre-charge coupling capacitor which are connected to the secondary side of the coupling reactor in series, and a follow current circuit which is connected to the coupling capacitor in parallel. The forward trigger module **31** is connected to the primary side of the coupling reactor of the forward charging commutation module in parallel. The reverse charging commutation module comprises a coupling reactor whose secondary side is connected to the commutation capacitor in series, a trigger switch and a forward pre-charge coupling capacitor which are connected to the secondary side of the coupling reactor in series, and a follow current circuit which is connected to the coupling capacitor in parallel. The reverse trigger module **32** is connected to the primary side of the coupling reactor of the reverse charging module in parallel. The follow current circuit comprises a resistor and a diode which are connected in series, and is configured to limit the voltage direction of the two ends of the coupling capacitor.

When a forward fault happens, the line current rises. After certain delay, the mechanical switch is turned off. When the mechanical switch is at an effective open distance, the forward trigger module is turned on so the coupling capacitor of the forward charging commutation module starts electric discharge. A reverse current is produced in the commutation branch circuit through the coupling reactor. The reverse current is superimposed on the branch circuit of the mechanical switch to realize voltage zero-crossing of the two ends of the mechanical switch and then the mechanical switch extinguishes arc discharge and is turned off. As the current constantly flows into the commutation branch circuit, the end contact voltage of the mechanical switch constantly rises. When the voltage reaches the operation voltage of the energy-absorbing and voltage-limiting module, the current is transferred to the energy-absorbing and voltage-limiting module to consume the energy stored in the system. Therefore, the complete turn-off of fault is realized.

When a reverse fault happens, the line current rises. After certain delay, the mechanical switch is turned off. When the mechanical switch is at an effective open distance, the reverse trigger module is turned on so the coupling capacitor of the reverse charging commutation module starts electric discharge. A reverse current is produced in the commutation branch circuit through the coupling reactor. The reverse current is superimposed on the branch circuit of the mechanical switch to realize voltage zero-crossing of the two ends of the mechanical switch and then the mechanical switch extinguishes arc discharge and is turned off. As the current constantly flows into the commutation branch circuit, the end contact voltage of the mechanical switch constantly rises. When the voltage reaches the operation voltage of the energy-absorbing and voltage-limiting module, the current is transferred to the energy-absorbing and voltage-limiting module to consume the energy stored in the system. Therefore, the complete turn-off of fault is realized.

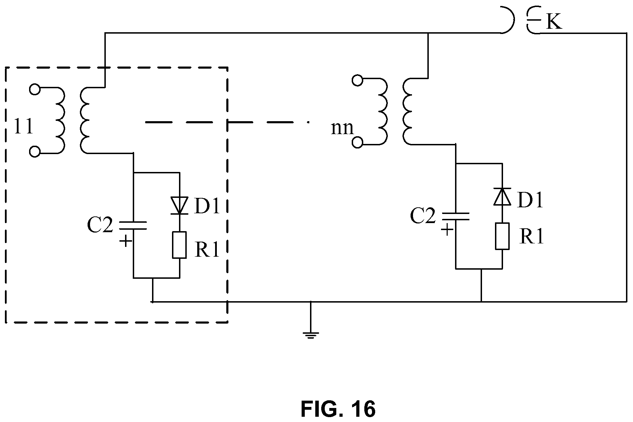

FIG. **16** is another topological structure of a commutation branch circuit and a trigger module of a high-voltage direct current circuit breaker comprising a coupling reactor provided by the fifth through twelfth embodiments of the present invention. For better illustration, FIG. **16** only shows the parts related to the fifth through twelfth embodiments in detail as follows:
The primary side of the charging commutation module and the trigger switch topology when a high-voltage direct current circuit breaker comprising a coupling reactor provided embodiment provides has a multi-module connection. When the circuit breaker comprises a plurality of mechanical switches in cascade, the primary sides of the charging commutation modules with the same direction are connected to each other in parallel and then with the trigger module in series. A trigger module triggers a plurality of charging commutation modules with the same direction at the same time to greatly reduce the amount of the trigger modules in the multi-module circuit breaker.

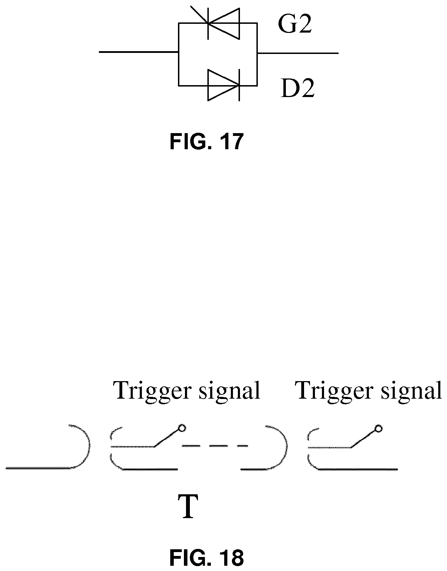

FIG. **17** is a topological structure of a trigger module comprising antiparallel thyristor and diode of a high-voltage direct current circuit breaker in accordance to one embodiment of the present invention. For better illustration, FIG. **17** only shows the parts related to the embodiment in detail as follows:
The trigger module of the high-voltage direct current circuit breaker of the present embodiment is a topological structure of a thyristor and a diode which are in antiparallel. When a fault happens, the thyristor is always on, the communication branch circuit constantly oscillates at high amplitude and produces multiple zero crossing points, so that the high-voltage direct current circuit breaker can reliably interrupt the forward current, reverse current and rated current. In addition, the trigger module is located in the low-voltage return circuit, so it only involves a small number of anti-paralleled thyristor and diode, the cost is low, and no heat dissipation system is required.

FIG. **18** is a topological structure of a trigger module comprising a spark gap of a high-voltage direct current circuit breaker comprising a coupling reactor provided by the embodiment of the present invention. For better illustration, FIG. **18** only shows the parts related to the embodiment in detail as follows:
The trigger module of the high-voltage direct current circuit breaker of the present embodiment is a topological structure of a spark gap. When a fault happens, the spark gap is triggered on, the communication branch circuit constantly oscillates at high amplitude and produces multiple zero crossing points, so that the high-voltage direct current circuit breaker can reliably interrupt the forward current, reverse current and rated current. In addition, the trigger module is located in the low-voltage return circuit, so it only involves a small number of spark gap, thus having high conductivity reliability.

The direct current circuit breaker isolates the charging loop through the coupling reactor, reduces the amount of trigger modules, greatly lowers costs, and makes the control of the direct current circuit breaker simpler and the circuit structure easier. In addition, the charging commutation module of the circuit breaker provides a function of bi-directional fault turn-off.

## Claims

1. A high-voltage direct current circuit breaker, the breaker comprising:
n in number circuit breaker modules (1) connected in series;
one energy-absorbing and voltage-limiting module (2) connected in parallel to the n in number circuit breaker modules; and
a trigger module (3);
wherein:
the n in number circuit breaker modules each comprise a mechanical switch (11) and a commutation branch circuit which are connected in parallel;
each commutation branch circuit comprises a charging commutation module (120) and a commutation capacitor (122) which are connected in series;
the charging commutation module is configured to charge up the commutation capacitor and produce high-frequency reverse current to cut off the mechanical switch;
the one energy-absorbing and voltage-limiting module is configured to absorb energy stored in inductive elements of power systems after a fault current is cut off, so as to limit voltage and protect the mechanical switches;
the trigger module is connected to n in number charging commutation modules, and is configured to trigger and turn on the n in number charging commutation modules after faults; and
n is a positive integer greater than or equal to 1;
**characterized in that:**
the charging commutation module comprises a coupling reactor, a coupling capacitor C2 which is connected in series to one end of a primary side of the coupling reactor, and a follow current circuit which is connected in parallel to the coupling capacitor C2; and
a secondary side of the coupling reactor is connected in series to the commutation capacitor, and the other end of the primary side of the coupling reactor is connected in series to the trigger module.

2. A high-voltage direct current circuit breaker, the breaker comprising:
n in number mechanical switches (11) connected in series;
one energy-absorbing and voltage-limiting module (2) connected in parallel to the n in number mechanical switches;
a trigger module (3); and
one commutation branch circuit connected in parallel to the n in number mechanical switches;
wherein: the one commutation branch circuit comprises a charging commutation module (120) and a commutation capacitor (122) which are connected in series;
the charging commutation module is configured to charge up the commutation capacitor and produce high-frequency reverse current to cut off the n in number mechanical switches;
the one energy-absorbing and voltage-limiting module is configured to absorb energy stored in inductive elements of power systems after a fault current is cut off, so as to limit voltage and protect the mechanical switches;
the trigger module is connected to the one charging commutation module, and is configured to trigger and turn on the one charging commutation module after faults;
n is a positive integer greater than 1;
**characterized in that:**
the charging commutation module comprises a coupling reactor, a coupling capacitor C2 which is connected in series to one end of a primary side of the coupling reactor, and a follow current circuit which is connected in parallel to the coupling capacitor C2; and
a secondary side of the coupling reactor is connected in series to the commutation capacitor, and the other end of the primary side of the coupling reactor is connected in series to the trigger module.

3. A high-voltage direct current circuit breaker, the breaker comprising:
n in number circuit breaker modules (1) connected in series;
n in number energy-absorbing and voltage-limiting modules (2) connected in parallel to the n in number circuit breaker modules, respectively; and
a trigger module (3);
wherein:
the n in number circuit breaker modules each comprise a mechanical switch (11) and a commutation branch circuit which are connected in parallel;
each commutation branch circuit comprises a charging commutation module (120) and a commutation capacitor (122) which are connected in series;
the charging commutation module is configured to charge up the commutation capacitor and produce high-frequency reverse current to cut off the mechanical switch;
the n in number energy-absorbing and voltage-limiting modules are configured to absorb energy stored in inductive elements of power systems after a fault current is cut off, so as to limit voltage and protect the mechanical switches;
the trigger module is connected to n in number charging commutation modules, and is configured to trigger and turn on the n in number charging commutation modules after faults;
n is a positive integer greater than 1;
**characterized in that:**
the charging commutation module comprises a coupling reactor, a coupling capacitor C2 which is connected in series to one end of a primary side of the coupling reactor, and a follow current circuit which is connected in parallel to the coupling capacitor C2; and
a secondary side of the coupling reactor is connected in series to the commutation capacitor, and the other end of the primary side of the coupling reactor is connected in series to the trigger module.

4. A high-voltage direct current circuit breaker, the breaker comprising:
n in number mechanical switches (11) connected in series;
n in number energy-absorbing and voltage-limiting modules (2) connected in parallel to the n in number mechanical switches, respectively;
a trigger module (3); and
one commutation branch circuit connected in parallel to the n in number mechanical switches;
wherein:
the one commutation branch circuit comprises a charging commutation module (120) and a commutation capacitor (122) which are connected in series;
the charging commutation module is configured to charge up the commutation capacitor and produce high-frequency reverse current to cut off the mechanical switches;
the n in number energy-absorbing and voltage-limiting modules are configured to absorb energy stored in inductive elements of power systems after a fault current is cut off, so as to limit voltage and protect the mechanical switches;
the trigger module is connected to the charging commutation module, and is configured to trigger and turn on the charging commutation module after faults;
n is a positive integer greater than 1;
**characterized in that:**
the charging commutation module comprises a coupling reactor, a coupling capacitor C2 which is connected in series to one end of a primary side of the coupling reactor, and a follow current circuit which is connected in parallel to the coupling capacitor C2; and
a secondary side of the coupling reactor is connected in series to the commutation capacitor, and the other end of the primary side of the coupling reactor is connected in series to the trigger module.

5. The high-voltage direct current circuit breaker of any of claims 1-4, wherein the follow current circuit comprises a resistor R1 and a diode D1 which are connected in series.

6. A high-voltage direct current circuit breaker of claim 1, wherein:
the charging commutation module comprises a forward charging commutation module (121) and a reverse charging commutation module (123) which are connected in series;
the forward charging commutation module is configured to produce a reverse current in the commutation branch circuit to realize the zero-crossing turn-off of the mechanical switch after a forward fault happens;
the reverse charging commutation module is configured to produce a reverse current in the commutation branch circuit to realize the zero-crossing turn-off of the mechanical switch after a reverse fault happens;
the trigger module comprises a forward trigger module (31) and a reverse trigger module (32);
the forward trigger module is connected to forward charging commutation modules of the n in number circuit breaker modules and is configured to turn on the forward charging commutation modules when a forward fault happens; and
the reverse trigger module is connected to reverse charging commutation modules of the n in number circuit breaker modules and is configured to turn on the reverse charging commutation modules when a reverse fault happens.

7. A high-voltage direct current circuit breaker of claim 2, wherein:
the charging commutation module comprises a forward charging commutation module (121) and a reverse charging commutation module (123) which are connected in series;
the forward charging commutation module is configured to produce a reverse current in the commutation branch circuit to realize the zero-crossing turn-off of the mechanical switches after a forward fault happens;
the reverse charging commutation module is configured to produce a reverse current in the commutation branch circuit to realize the zero-crossing turn-off of the mechanical switches after a reverse fault happens;
the trigger module comprises a forward trigger module (31) and a reverse trigger module (32);
the forward trigger module is connected to the forward charging commutation module and is configured to turn on the forward charging commutation module when a forward fault happens; and
the reverse trigger module is connected to the reverse charging commutation module and is configured to turn on the reverse charging commutation module when a reverse fault happens.

8. A high-voltage direct current circuit breaker of claim 3, wherein:
the charging commutation module comprises a forward charging commutation module (121) and a reverse charging commutation module (123) which are connected in series;
the forward charging commutation module is configured to produce a reverse current in the commutation branch circuit to realize the zero-crossing turn-off of the mechanical switch after a forward fault happens;
the reverse charging commutation module is configured to produce a reverse current in the commutation branch circuit to realize the zero-crossing turn-off of the mechanical switch after a reverse fault happens;
the trigger module comprises a forward trigger module (31) and a reverse trigger module (32);
the forward trigger module is connected to forward charging commutation modules of the n in number circuit breaker modules and is configured to turn on the forward charging commutation modules when a forward fault happens; and
the reverse trigger module is connected to reverse charging commutation modules of the n in number circuit breaker modules and is configured to turn on the reverse charging commutation modules when a reverse fault happens.

9. A high-voltage direct current circuit breaker of claim 4, wherein:
the charging commutation module comprises a forward charging commutation module (121) and a reverse charging commutation module (123) which are connected in series;
the forward charging commutation module is configured to produce a reverse current in the commutation branch circuit to realize the zero-crossing turn-off of the mechanical switches after a forward fault happens;
the reverse charging commutation module is configured to produce a reverse current in the commutation branch circuit to realize the zero-crossing turn-off of the mechanical switches after a reverse fault happens;
the trigger module comprises a forward trigger module (31) and a reverse trigger module (32);
the forward trigger module is connected to the forward charging commutation module and is configured to turn on the forward charging commutation module when a forward fault happens; and
the reverse trigger module is connected to the reverse charging commutation module and is configured to turn on the reverse charging commutation module when a reverse fault happens.

10. A high-voltage direct current circuit breaker of claim 1, wherein:
the charging commutation module comprises a forward charging commutation module (121) and a reverse charging commutation module (123) which is connected in parallel to the forward charging commutation module;
the forward charging commutation module is configured to produce a reverse current in the commutation branch circuit to realize the zero-crossing turn-off of the mechanical switch after a forward fault happens;
the reverse charging commutation module is configured to produce a reverse current in the commutation branch circuit to realize the zero-crossing turn-off of the mechanical switch after a reverse fault happens;
the trigger module comprises a forward trigger module (31) and a reverse trigger module (32);
the forward trigger module is configured to turn on forward charging commutation modules of the n in number circuit breaker modules when a forward fault happens; and
the reverse trigger module is configured to turn on reverse charging commutation modules of the n in number circuit breaker modules when a reverse fault happens.

11. A high-voltage direct current circuit breaker of claim 2, wherein:
the charging commutation module comprises a forward charging commutation module (121) and a reverse charging commutation module (123) which is connected in parallel to the forward charging commutation module;
the forward charging commutation module is configured to produce a reverse current in the commutation branch circuit to realize the zero-crossing turn-off of the mechanical switches after a forward fault happens;
the reverse charging commutation module is configured to produce a reverse current in the commutation branch circuit to realize the zero-crossing turn-off of the mechanical switches after a reverse fault happens;
the trigger module comprises a forward trigger module (31) and a reverse trigger module (32);
the forward trigger module is connected to the forward charging commutation module and is configured to turn on the forward charging commutation module when a forward fault happens; and
the reverse trigger module is connected to the reverse charging commutation module and is configured to turn on the reverse charging commutation module when a reverse fault

12. A high-voltage direct current circuit breaker of claim 3, wherein:
the charging commutation module comprises a forward charging commutation module (121) and a reverse charging commutation module (123) which is connected in parallel to the forward charging commutation module;
the forward charging commutation module is configured to produce a reverse current in the commutation branch circuit to realize the zero-crossing turn-off of the mechanical switch after a forward fault happens;
the reverse charging commutation module is configured to produce a reverse current in the commutation branch circuit to realize the zero-crossing turn-off of the mechanical switch after a reverse fault happens;
the trigger module comprises a forward trigger module (31) and a reverse trigger module (32);
the forward trigger module is connected to forward charging commutation modules of the n in number circuit breaker modules and is configured to turn on the forward charging commutation modules when a forward fault happens;
the reverse trigger module is connected to reverse charging commutation modules of the n in number circuit breaker modules and is configured to turn on the reverse charging commutation modules when a reverse fault happens.

13. A high-voltage direct current circuit breaker of claim 4, wherein:
the charging commutation module comprises a forward charging commutation module (121) and a reverse charging commutation module (123) which is connected in parallel to the forward charging commutation module;
the forward charging commutation module is configured to produce a reverse current in the commutation branch circuit to realize the zero-crossing turn-off of the mechanical switches after a forward fault happens;
the reverse charging commutation module is configured to produce a reverse current in the commutation branch circuit to realize the zero-crossing turn-off of the mechanical switches after a reverse fault happens;
the trigger module comprises a forward trigger module (31) and a reverse trigger module (32);
the forward trigger module is connected to the forward charging commutation module and is configured to turn on the forward charging commutation module when a forward fault happens; and
the reverse trigger module is connected to the reverse charging commutation module and is configured to turn on the reverse charging commutation module when a reverse fault happens.

14. The high-voltage direct current circuit breaker of any of claims 6-13, wherein:
the forward charging commutation module comprises a first coupling reactor, a first coupling capacitor C2, and a first follow current circuit which is connected in parallel to the first coupling capacitor C2;
a secondary side of the first coupling reactor (11) is connected in series to the commutation capacitor; one end of a primary side of the first coupling reactor is grounded through the first coupling capacitor C2, and the other end of the primary side of the first coupling reactor is connected to the forward trigger module; and
the first follow current circuit comprises a diode and a resistor which are connected in series; an anode of the diode is connected to the first coupling capacitor C2, and a cathode of the diode is connected in series to the resistor R1.

15. The high-voltage direct current circuit breaker of any of claims 6-13, wherein:
the reverse charging commutation module comprises a second coupling reactor, a second coupling capacitor C2, and a second follow current circuit which is connected in parallel to the second coupling capacitor C2;
a secondary side of the second coupling reactor (11') is connected in series to the commutation capacitor; one end of a primary side of the second coupling reactor is grounded through the second coupling capacitor C2, and the other end of the primary side of the second coupling reactor is connected to the reverse trigger module;
the second follow current circuit comprises a diode and a resistor which are connected in series; a cathode of the diode is connected to the second coupling capacitor C2, and an anode of the diode is connected in series to the resistor R1.

16. The high-voltage direct current circuit breaker of any of claims 1-15, wherein the trigger module, the forward trigger module, or the reverse trigger module comprises a thyristor G2 and a diode D2 which are connected in parallel.

17. The high-voltage direct current circuit breaker of any of claims 1-15, wherein the trigger module, the forward trigger module, or the reverse trigger module comprises a spark gap T.

## Patentansprüche

1. Hochspannungs-Gleichstrom-Leistungsschalter, wobei der Schalter Folgendes umfasst:
n in Reihe geschaltete Leistungsschaltermodule (1);
ein energieabsorbierendes und spannungsbegrenzendes Modul (2), das parallel zu den n Leistungsschaltermodulen geschaltet ist; und
ein Auslösemodul (3);
wobei:
die n Leistungsschaltermodule jeweils einen mechanischen Schalter (11) und einen Kommutierungszweigschaltkreis umfassen, die parallel geschaltet sind;
jeder Kommutierungszweigschaltkreis ein Ladungskommutierungsmodul (120) und einen Kommutierungskondensator (122) umfasst, die in Reihe geschaltet sind;
das Ladungskommutierungsmodul ausgelegt ist, um den Kommutierungskondensator aufzuladen und einen hochfrequenten Rückstrom zu erzeugen, um den mechanischen Schalter abzuschalten;
das energieabsorbierende und spannungsbegrenzende Modul ausgelegt ist, um in induktiven Elementen von Leistungssystemen gespeicherte Energie zu absorbieren, nachdem ein Fehlerstrom abgeschaltet wurde, um die Spannung zu begrenzen und die mechanischen Schalter zu schützen;
das Auslösemodul mit n Ladungskommutierungsmodulen verbunden und ausgelegt ist, um die n Ladungskommutierungsmodule nach Fehlern auszulösen und anzuschalten; und
n eine positive Ganzzahl größer gleich 1 ist;
**dadurch gekennzeichnet, dass**:
das Ladungskommutierungsmodul einen Kopplungsreaktor, einen Kopplungskondensator C2, der mit einem Ende einer primären Seite des Kopplungsreaktors in Reihe geschaltet ist, und einen Folgestromkreis, der parallel zu dem Kopplungskondensator C2 geschaltet ist, umfasst; und
eine sekundäre Seite des Kopplungsreaktors mit dem Kommutierungskondensator in Reihe geschaltet ist und das andere Ende der primären Seite des Kopplungsreaktors mit dem Auslösemodul in Reihe geschaltet ist.

2. Hochspannungs-Gleichstrom-Leistungsschalter, wobei der Schalter Folgendes umfasst:
n in Reihe geschaltete mechanische Schalter (11);
ein energieabsorbierendes und spannungsbegrenzendes Modul (2), das parallel zu den n mechanischen Schaltern geschaltet ist;
eine Auslösemodul (3); und
einen Kommutierungszweigschaltkreis, der parallel zu den n mechanischen Schaltern geschaltet ist;
wobei: der eine Kommutierungszweigschaltkreis ein Ladungskommutierungsmodul (120) und einen Kommutierungskondensator (122) umfasst, die in Reihe geschaltet sind;
das Ladungskommutierungsmodul ausgelegt ist, um den Kommutierungskondensator aufzuladen und einen hochfrequenten Rückstrom zu erzeugen, um die n mechanischen Schalter abzuschalten;
das energieabsorbierende und spannungsbegrenzende Modul ausgelegt ist, um in induktiven Elementen von Leistungssystemen gespeicherte Energie zu absorbieren, nachdem ein Fehlerstrom abgeschaltet wurde, um die Spannung zu begrenzen und die mechanischen Schalter zu schützen;
das Auslösemodul mit den n Ladungskommutierungsmodulen verbunden ist und ausgelegt ist, um die n Ladungskommutierungsmodule nach Fehlern auszulösen und anzuschalten;
n eine positive Ganzzahl größer 1 ist;
**dadurch gekennzeichnet, dass**:
das Ladungskommutierungsmodul einen Kopplungsreaktor, einen Kopplungskondensator C2, der mit einem Ende einer primären Seite des Kopplungsreaktors in Reihe geschaltet ist, und einen Folgestromkreis, der parallel zu dem Kopplungskondensator C2 geschaltet ist, umfasst; und
eine sekundäre Seite des Kopplungsreaktors mit dem Kommutierungskondensator in Reihe geschaltet ist und das andere Ende der primären Seite des Kopplungsreaktors mit dem Auslösemodul in Reihe geschaltet ist.

3. Hochspannungs-Gleichstrom-Leistungsschalter, wobei der Schalter Folgendes umfasst:
n in Reihe geschaltete Leistungsschaltermodule (1);
n energieabsorbierende und spannungsbegrenzende Module (2), die jeweils parallel zu den n Leistungsschaltermodulen geschaltet sind; und
ein Auslösemodul (3);
wobei:
die n Leistungsschaltermodule jeweils einen mechanischen Schalter (11) und einen Kommutierungszweigschaltkreis umfassen, die parallel geschaltet sind;
jeder Kommutierungszweigschaltkreis ein Ladungskommutierungsmodul (120) und einen Kommutierungskondensator (122) umfasst, die in Reihe geschaltet sind;
das Ladungskommutierungsmodul ausgelegt ist, um den Kommutierungskondensator aufzuladen und einen hochfrequenten Rückstrom zu erzeugen, um den mechanischen Schalter abzuschalten;
die n energieabsorbierenden und spannungsbegrenzenden Module ausgelegt sind, um in induktiven Elementen von Leistungssystemen gespeicherte Energie zu absorbieren, nachdem ein Fehlerstrom abgeschaltet wurde, um die Spannung zu begrenzen und die mechanischen Schalter zu schützen;
das Auslösemodul mit n Ladungskommutierungsmodulen verbunden und ausgelegt ist, um die n Ladungskommutierungsmodule nach Fehlern auszulösen und anzuschalten;
n eine positive Ganzzahl größer 1 ist;
**dadurch gekennzeichnet, dass**:
das Ladungskommutierungsmodul einen Kopplungsreaktor, einen Kopplungskondensator C2, der mit einem Ende einer primären Seite des Kopplungsreaktors in Reihe geschaltet ist, und einen Folgestromkreis, der parallel zu dem Kopplungskondensator C2 geschaltet ist, umfasst; und
eine sekundäre Seite des Kopplungsreaktors mit dem Kommutierungskondensator in Reihe geschaltet ist und das andere Ende der primären Seite des Kopplungsreaktors mit dem Auslösemodul in Reihe geschaltet ist.

4. Hochspannungs-Gleichstrom-Leistungsschalter, wobei der Schalter Folgendes umfasst:
n in Reihe geschaltete mechanische Schalter (11);
n energieabsorbierende und spannungsbegrenzende Module (2), die jeweils parallel zu den n mechanischen Schaltern geschaltet sind;
ein Auslösemodul (3); und
einen Kommutierungszweigschaltkreis, der parallel zu den n mechanischen Schaltern geschaltet ist;
wobei:
der eine Kommutierungszweigschaltkreis ein Ladungskommutierungsmodul (120) und einen Kommutierungskondensator (122) umfasst, die in Reihe geschaltet sind;
das Ladungskommutierungsmodul ausgelegt ist, um den Kommutierungskondensator aufzuladen und einen hochfrequenten Rückstrom zu erzeugen, um die mechanischen Schalter abzuschalten;
die n energieabsorbierenden und spannungsbegrenzenden Module ausgelegt sind, um in induktiven Elementen von Leistungssystemen gespeicherte Energie zu absorbieren, nachdem ein Fehlerstrom abgeschaltet wurde, um die Spannung zu begrenzen und die mechanischen Schalter zu schützen;
das Auslösemodul mit den Ladungskommutierungsmodulen verbunden und ausgelegt ist, um die Ladungskommutierungsmodule nach Fehlern auszulösen und anzuschalten;
n eine positive Ganzzahl größer 1 ist;
**dadurch gekennzeichnet, dass**;
das Ladungskommutierungsmodul einen Kopplungsreaktor, einen Kopplungskondensator C2, der mit einem Ende einer primären Seite des Kopplungsreaktors in Reihe geschaltet ist, und einen Folgestromkreis, der parallel zu dem Kopplungskondensator C2 geschaltet ist, umfasst; und
eine sekundäre Seite des Kopplungsreaktors mit dem Kommutierungskondensator in Reihe geschaltet ist und das andere Ende der primären Seite des Kopplungsreaktors mit dem Auslösemodul in Reihe geschaltet ist.

5. Hochspannungs-Gleichstrom-Leistungsschalter nach einem der Ansprüche 1-4, wobei der Folgestromkreis einen Widerstand R1 und eine Diode D1 umfasst, die in Reihe geschaltet sind.

6. Hochspannungs-Gleichstrom-Leistungsschalter nach Anspruch 1, wobei:
das Ladungskommutierungsmodul ein Vorwärtsladungskommutierungsmodul (121) und ein Rückwärtsladungskommutierungsmodul (123) umfasst, die in Reihe geschaltet sind;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit den Vorwärtsladungskommutierungsmodulen der n Leistungsschaltermodule verbunden und ausgelegt ist, um die Vorwärtsladungskommutierungsmodule anzuschalten, wenn ein Vorwärtsfehler aufgetreten ist; und
das Rückwärtsauslösemodul mit den Rückwärtsladungskommutierungsmodulen der n Leistungsschaltermodule verbunden und ausgelegt ist, um die Rückwärtsladungskommutierungsmodule anzuschalten, wenn ein Rückwärtsfehler aufgetreten ist.

7. Hochspannungs-Gleichstrom-Leistungsschalter nach Anspruch 2, wobei:
das Ladungskommutierungsmodul ein Vorwärtsladungskommutierungsmodul (121) und ein Rückwärtsladungskommutierungsmodul (123) umfasst, die in Reihe geschaltet sind;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit dem Vorwärtsladungskommutiefungsmodul verbunden und ausgelegt ist, um das Vorwärtsladungskommutierungsmodul anzuschalten, wenn ein Vorwärtsfehler aufgetreten ist; und
das Rückwärtsauslösemodul mit dem Rückwärtsladungskommutierungsmodul verbunden und ausgelegt ist, um das Rückwärtsladungskommutierungsmodul anzuschalten, wenn ein Rückwärtsfehler aufgetreten ist.

8. Hochspannungs-Gleichstrom-Leistungsschalter nach Anspruch 3, wobei:
das Ladungskommutierungsmodul ein Vorwärtsladungskommutierungsmodul (121) und ein Rückwärtsladungskommutierungsmodul (123) umfasst, die in Reihe geschaltet sind;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit den Vorwärtsladungskommutierungsmodulen der n Leistungsschaltermodule verbunden und ausgelegt ist, um die Vorwärtsladungskommutierungsmodule anzuschalten, wenn ein Vorwärtsfehler aufgetreten ist; und
das Rückwärtsauslösemodul mit den Rückwärtsladungskommutierungsmodulen der n Leistungsschaltermodule verbunden und ausgelegt ist, um die Rückwärtsladungskommutierungsmodule anzuschalten, wenn ein Rückwärtsfehler aufgetreten ist.

9. Hochspannungs-Gleichstrom-Leistungsschalter nach Anspruch 4, wobei:
das Ladungskommutierungsmodul ein Vorwärtsladungskommutierungsmodul (121) und ein Rückwärtsladungskommutierungsmodul (123) umfasst, die in Reihe geschaltet sind;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit dem Vorwärtsladungskommutierungsmodul verbunden und ausgelegt ist, um das Vorwärtsladungskommutierungsmodul anzuschalten, wenn ein Vorwärtsfehler aufgetreten ist; und
das Rückwärtsauslösemodul mit dem Rückwärtsladungskommutierungsmodul verbunden und ausgelegt ist, um das Rückwärtsladungskommutierungsmodul anzuschalten, wenn ein Rückwärtsfehler aufgetreten ist.

10. Hochspannungs-Gleichstrom-Leistungsschalter nach Anspruch 1, wobei:
das Ladungskommutierungsmodul ein Vorwärtsladungskommutierungsmodul (121) und ein Rückwärtsiadungskommutierungsmodul (123), das parallel zu dem Vorwärtsladungskommutierungsmodul geschaltet ist, umfasst;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul ausgelegt ist, um die Vorwärtsladungskommutierungsmodule der n Leistungsschaltermodule anzuschalten, wenn ein Vorwärtsfehler aufgetreten ist; und
das Rückwärtsauslösemodul ausgelegt ist, um die Rückwärtsladungskommutierungsmodule der n Leistungsschaltermodule anzuschalten, wenn ein Rückwärtsfehler aufgetreten ist.

11. Hochspannungs-Gleichstrom-Leistungsschalter nach Anspruch 2, wobei:
das Ladungskommutierungsmodul ein Vorwärtsladungskommutierungsmodul (121) und ein Rückwärtsladungskommutierungsmodul (123), das parallel zu dem Vorwärtsladungskommutierungsmodul geschaltet ist, umfasst;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit dem Vorwärtsladungskommutierungsmodul verbunden und ausgelegt ist, um das Vorwärtsladungskommutierungsmodul anzuschalten, wenn ein Vorwärtsfehler aufgetreten ist; und
das Rückwärtsauslösemodul mit dem Rückwärtsladungskommutierungsmodul verbunden und ausgelegt ist, um das Rückwärtsladungskommutierungsmodul anzuschalten, wenn ein Rückwärtsfehler aufgetreten ist.

12. Hochspannungs-Gleichstrom-Leistungsschalter nach Anspruch 3, wobei:
das Ladungskommutierungsmodul ein Vorwärtsladungskommutierungsmodul (121) und ein Rückwärtsladungskommutierungsmodul (123), das parallel zu dem Vorwärtsladungskommutierungsmodul geschaltet ist, umfasst;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit den Vorwärtsladungskommutierungsmodulen der n Leistungsschaltermodule verbunden und ausgelegt ist, um die Vorwärtsladungskommutierungsmodule anzuschalten, wenn ein Vorwärtsfehler aufgetreten ist; und
das Rückwärtsauslösemodul mit den Rückwärtsladungskommutierungsmodulen der n Leistungsschaltermodule verbunden und ausgelegt ist, um die Rückwärtsladungskommutierungsmodule anzuschalten, wenn ein Rückwärtsfehler aufgetreten ist.

13. Hochspannungs-Gleichstrom-Leistungsschalter nach Anspruch 4, wobei:
das Ladungskommutierungsmodul ein Vorwärtsladungskommutierungsmodul (121) und ein Rückwärtsladungskommutierungsmodul (123), das parallel zu dem Vorwärtsladungskommutierungsmodul geschaltet ist, umfasst;
das Vorwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Vorwärtsfehler aufgetreten ist;
das Rückwärtsladungskommutierungsmodul ausgelegt ist, um einen Rückstrom in dem Kommutierungszweigschaltkreis zu erzeugen, um die Nulldurchgangsabschaltung des mechanischen Schalters zu realisieren, nachdem ein Rückwärtsfehler aufgetreten ist;
das Auslösemodul ein Vorwärtsauslösemodul (31) und ein Rückwärtsauslösemodul (32) umfasst;
das Vorwärtsauslösemodul mit dem Vorwärtsladungskommutierungsmodul verbunden und ausgelegt ist, um das Vorwärtsladungskommutierungsmodul anzuschalten, wenn ein Vorwärtsfehler aufgetreten ist; und
das Rückwärtsauslösemodul mit dem Rückwärtsladungskommutierungsmodul verbunden und ausgelegt ist, um das Rückwärtsladungskommutierungsmodul anzuschalten, wenn ein Rückwärtsfehler aufgetreten ist.

14. Hochspannungs-Gleichstrom-Leistungsschalter nach einem der Ansprüche 6-13, wobei:
das Vorwärtsladungskommutierungsmodul einen ersten Kopplungsreaktor, einen ersten Kopplungskondensator C2 und einen ersten Folgestromkreis, der parallel zu dem ersten Kopplungskondensator C2 geschaltet ist, umfasst;
eine sekundäre Seite des ersten Kopplungsreaktors (11) mit dem Kommutierungskondensator in Reihe geschaltet ist; ein Ende einer primären Seite des ersten Kopplungsreaktors über den ersten Kopplungskondensator C2 geerdet ist und das andere Ende der primären Seite des ersten Kopplungsreaktors mit dem Vorwärtsauslösemodul verbunden; und
der erste Folgestromkreis eine Diode und einen Widerstand umfasst, die in Reihe geschaltet sind; eine Anode der Diode mit dem ersten Kopplungskondensator C2 verbunden ist und eine Kathode der Diode mit dem Widerstand R1 in Reihe geschaltet ist.

15. Hochspannungs-Gleichstrom-Leistungsschalter nach einem der Ansprüche 6-13, wobei:
das Rückwärtsladungskommutierungsmodul einen zweiten Kopplungsreaktor, einen zweiten Kopplungskondensator C2 und einen zweiten Folgestromkreis, der parallel zu dem zweiten Kopplungskondensator C2 geschaltet ist, umfasst;
eine sekundäre Seite des zweiten Kopplungsreaktors (11') mit dem Kommutierungskondensator in Reihe geschaltet ist; ein Ende einer primären Seite des zweiten Kopplungsreaktors über den zweiten Kopplungskondensator C2 geerdet ist und das andere Ende der primären Seite des zweiten Kopplungsreaktors mit dem Rückwärtsauslösemodul verbunden;
der zweite Folgestromkreis eine Diode und einen Widerstand umfasst, die in Reihe geschaltet sind; eine Kathode der Diode mit dem zweiten Kopplungskondensator C2 verbunden ist und eine Anode der Diode mit dem Widerstand R1 in Reihe geschaltet ist.

16. Hochspannungs-Gleichstrom-Leistungsschalter nach einem der Ansprüche 1-15, wobei das Auslösemodul, das Vorwärtsauslösemodul oder das Rückwärtsauslosemodul einen Thyristor G2 und eine Diode D2 umfasst, die in Reihe geschaltet sind.

17. Hochspannungs-Gleichstrom-Leistungsschalter nach einem der Ansprüche 1-15, wobei das Auslösemodul, das Vorwärtsauslösemodul oder das Rückwärtsauslosemodul einen Elektrodenabstand T umfasst.

## Revendications

1. Disjoncteur pour courant continu à haute tension, le disjoncteur comprenant :
un nombre n de modules de disjoncteur (1) connectés en série ;
un module d'absorption d'énergie et de limitation de tension (2) connecté en parallèle au nombre n de modules de disjoncteur ; et
un module de déclenchement (3) ;
dans lequel :
les n modules de disjoncteur comprennent chacun un commutateur mécanique (11) et un circuit de branche de commutation, lesquels sont connectés en parallèle ;
chaque circuit de branche de commutation comprend un module de commutation de charge (120) et un condensateur de commutation (122), lesquels sont connectés en série ;
le module de commutation de charge est configuré pour charger le condensateur de commutation (122) et pour produire un courant inversé à haute fréquence pour éteindre le commutateur mécanique ;
le module d'absorption d'énergie et de limitation de tension est configuré pour absorber de l'énergie stockée dans des éléments inductifs de systèmes électriques après la coupure d'un courant de défaut, de manière à limiter la tension et à protéger les commutateurs mécaniques ;
le module de déclenchement est connecté à un nombre n de modules de commutation de charge, et configuré pour déclencher et activer les n modules de commutation de charge après des défauts ; et
n est un nombre entier positif supérieur ou égal à 1 ;
**caractérisé en ce que** :
le module de commutation de charge comprend un réacteur de couplage, un condensateur de couplage C2 connecté en série à une extrémité d'un côté primaire du réacteur de couplage, et un circuit de courant de suivi connecté en parallèle au condensateur de couplage C2 ; et
un côté secondaire du réacteur de couplage est connecté en série au condensateur de commutation, et l'autre extrémité du côté primaire du réacteur de couplage est connecté en série au module de déclenchement.

2. Disjoncteur pour courant continu à haute tension, le disjoncteur comprenant :
un nombre n de commutateurs mécaniques (11) connectés en série ;
un module d'absorption d'énergie et de limitation de tension (2) relié en parallèle au nombre n de commutateurs mécaniques (11) ;
un module de déclenchement (3) ; et
un circuit de branche de commutation connecté en parallèle au nombre n de commutateurs mécaniques ;
dans lequel : le circuit de branche de commutation comprend un module de commutation de charge (120) et un condensateur de commutation (122) connectés en série ;
le module de commutation de charge est configuré pour charger le condensateur de commutation et pour produire un courant inversé à haute fréquence pour éteindre les n commutateurs mécaniques ;
le module d'absorption d'énergie et de limitation de tension est configuré pour absorber de l'énergie stockée dans des éléments inductifs de systèmes électriques après la coupure d'un courant de défaut, de manière à limiter la tension et à protéger les commutateurs mécaniques ;
le module de déclenchement est connecté à un module de commutation de charge, et configuré pour déclencher et activer le module de commutation de charge après des défauts ;
n est un nombre entier positif supérieur ou égal à 1 ;
**caractérisé en ce que** :
le module de commutation de charge comprend un réacteur de couplage, un condensateur de couplage C2 connecté en série à une extrémité d'un côté primaire du réacteur de couplage, et un circuit de courant de suivi connecté en parallèle au condensateur de couplage C2 ; et
un côté secondaire du réacteur de couplage est connecté en série au condensateur de commutation, et l'autre extrémité du côté primaire du réacteur de couplage est connectée en série au module de déclenchement.

3. Disjoncteur pour courant continu à haute tension, le disjoncteur comprenant :
un nombre n de modules de disjoncteur (1) connectés en série ;
un nombre n de modules d'absorption d'énergie et de limitation de tension (2) connectés en parallèle au nombre n de modules de disjoncteur, respectivement ; et
un module de déclenchement (3) ;
dans lequel :
les n modules de disjoncteur comprennent chacun un commutateur mécanique (11) et un circuit de branche de commutation, lesquels sont connectés en parallèle ;
chaque circuit de branche de commutation comprend un module de commutation de charge (120) et un condensateur de commutation (122), lesquels sont connectés en série ;
le module de commutation de charge est configuré pour charger le condensateur de commutation et pour produire un courant inversé à haute fréquence pour éteindre le commutateur mécanique ;
les n modules d'absorption d'énergie et de limitation de tension sont configurés pour absorber de l'énergie stockée dans des éléments inductifs de systèmes électriques après la coupure d'un courant de défaut, de manière à limiter la tension et à protéger les commutateurs mécaniques ;
le module de déclenchement est connecté à un nombre n de modules de commutation de charge, et configuré pour déclencher et activer les n modules de commutation de charge après des défauts ; et
n est un nombre entier positif supérieur ou égal à 1 ;
**caractérisé en ce que** :
le module de commutation de charge comprend un réacteur de couplage, un condensateur de couplage C2 connecté en série à une extrémité d'un côté primaire du réacteur de couplage, et un circuit de courant de suivi connecté en parallèle au condensateur de couplage C2 ; et
un côté secondaire du réacteur de couplage est connecté en série au condensateur de commutation, et l'autre extrémité du côté primaire du réacteur de couplage est connectée en série au module de déclenchement.

4. Disjoncteur pour courant continu à haute tension, le disjoncteur comprenant :
un nombre n de commutateurs mécaniques (11) connectés en série ;
un nombre n de modules d'absorption d'énergie et de limitation de tension (2) connectés en parallèle au nombre n de commutateurs mécaniques, respectivement ;
un module de déclenchement (3) ; et
un circuit de branche de commutation connecté en parallèle au nombre n de commutateurs mécaniques ;
dans lequel :
le circuit de branche de commutation comprend un module de commutation de charge (120) et un condensateur de commutation (122) connectés en série ;
le module de commutation de charge est configuré pour charger le condensateur de commutation et pour produire un courant inversé à haute fréquence pour éteindre les commutateurs mécaniques ;
les n modules d'absorption d'énergie et de limitation de tension sont configurés pour absorber de l'énergie stockée dans des éléments inductifs de systèmes électriques après la coupure d'un courant de défaut, de manière à limiter la tension et à protéger les commutateurs mécaniques ;
le module de déclenchement est connecté au module de commutation de charge, et configuré pour déclencher et activer le module de commutation de charge après des défauts ;
n est un nombre entier positif supérieur à 1 ;
**caractérisé en ce que** :
le module de commutation de charge comprend un réacteur de couplage, un condensateur de couplage C2 connecté en série à une extrémité d'un côté primaire du réacteur de couplage, et un circuit de courant de suivi connecté en parallèle au condensateur de couplage C2 ; et
un côté secondaire du réacteur de couplage est connecté en série au condensateur de commutation, et l'autre extrémité du côté primaire du réacteur de couplage est connectée en série au module de déclenchement.

5. Disjoncteur pour courant continu à haute tension selon l'une quelconque des revendications 1 à 4, dans lequel le circuit de courant de suivi comprend une résistance R1 et une diode D1 connectées en série.

6. Disjoncteur pour courant continu à haute tension selon la revendication 1, dans lequel :
le module de commutation de charge comprend un module de commutation de charge avant (121) et un module de commutation de charge inverse (123) connectés en série ;
le module de commutation de charge avant est configuré pour produire un courant inverse dans le circuit de branche de commutation pour effectuer l'extinction par passage à zéro du commutateur mécanique après l'apparition d'un défaut avant ;
le module de commutation de charge inverse est configuré pour produire un courant inverse dans le circuit de branche de commutation afin d'effectuer l'extinction par passage à zéro du commutateur mécanique après l'apparition d'un défaut inverse ;
le module de déclenchement comprend un module de déclenchement avant (31) et un module de déclenchement inverse (32) ;
le module de déclenchement avant est connecté à des modules de commutation de charge avant des n modules de disjoncteur et configuré pour activer les modules de commutation de charge avant lors de l'apparition d'un défaut avant ; et
le module de déclenchement inverse est connecté à des modules de commutation de charge inverse des n modules de disjoncteur et configuré pour activer les modules de commutation de charge inverse lors de l'apparition d'un défaut inverse.

7. Disjoncteur pour courant continu à haute tension selon la revendication 2, dans lequel :
le module de commutation de charge comprend un module de commutation de charge avant (121) et un module de commutation de charge inverse (123) connectés en série ;
le module de commutation de charge avant est configuré pour produire un courant inverse dans le circuit de branche de commutation pour effectuer l'extinction par passage à zéro des commutateurs mécaniques après l'apparition d'un défaut avant ;
le module de commutation de charge inverse est configuré pour produire un courant inverse dans le circuit de branche de commutation pour effectuer l'extinction par passage à zéro des commutateurs mécaniques après l'apparition d'un défaut inverse ;
le module de déclenchement comprend un module de déclenchement avant (31) et un module de déclenchement inverse (32) ;
le module de déclenchement avant est connecté au module de commutation de charge avant et configuré pour activer le module de commutation de charge avant lors de l'apparition d'un défaut ; et
le module de déclenchement inverse est connecté au module de commutation de charge inverse et configuré pour activer le module de commutation de charge inverse lors de l'apparition d'un défaut.

8. Disjoncteur pour courant continu à haute tension selon la revendication 3, dans lequel :
le module de commutation de charge comprend un module de commutation de charge avant (121) et un module de commutation de charge inverse (123) connectés en série ;
le module de commutation de charge avant est configuré pour produire un courant inverse dans le circuit de branche de commutation pour effectuer l'extinction par passage à zéro du commutateur mécanique après l'apparition d'un défaut avant ;
le module de commutation de charge inverse est configuré pour produire un courant inverse dans le circuit de branche de commutation pour effectuer l'extinction par passage à zéro du commutateur mécanique après l'apparition d'un défaut inverse ;
le module de déclenchement comprend un module de déclenchement avant (31) et un module de déclenchement inverse (32) ;
le module de déclenchement avant est connecté à des modules de commutation de charge avant des n modules de disjoncteur et configuré pour activer les modules de commutation de charge avant lors de l'apparition d'un défaut avant ; et
le module de déclenchement inverse est connecté à des modules de commutation de charge inverse des n modules de disjoncteur et configuré pour activer les modules de commutation de charge inverse lors de l'apparition d'un défaut inverse.

9. Disjoncteur pour courant continu à haute tension selon la revendication 4, dans lequel :
le module de commutation de charge comprend un module de commutation de charge avant (121) et un module de commutation de charge inverse (123) connectés en série ;
le module de commutation de charge avant est configuré pour produire un courant inverse dans le circuit de branche de commutation pour effectuer l'extinction par passage à zéro des commutateurs mécaniques après l'apparition d'un défaut avant ;
le module de commutation de charge inverse est configuré pour produire un courant inverse dans le circuit de branche de commutation pour effectuer l'extinction par passage à zéro des commutateurs mécaniques après l'apparition d'un défaut inverse ;
le module de déclenchement comprend un module de déclenchement avant (31) et un module de déclenchement inverse (32) ;
le module de déclenchement avant est connecté au module de commutation de charge avant et configuré pour activer le module de commutation de charge avant lors de l'apparition d'un défaut avant ; et
le module de déclenchement inverse est connecté au module de commutation de charge inverse et configuré pour activer le module de commutation de charge inverse lors de l'apparition d'un défaut inverse.

10. Disjoncteur pour courant continu à haute tension selon la revendication 1, dans lequel :
le module de commutation de charge comprend un module de commutation de charge avant (121) et un module de commutation de charge inverse (123) connecté en parallèle au module de commutation de charge avant ;
le module de commutation de charge inverse est configuré pour produire un courant inverse dans le circuit de branche de commutation pour effectuer l'extinction par passage à zéro du commutateur mécanique après l'apparition d'un défaut avant ;
le module de commutation de charge inverse est configuré pour produire un courant inverse dans le circuit de branche de commutation pour effectuer l'extinction par passage à zéro du commutateur mécanique après l'apparition d'un défaut inverse ;
le module de déclenchement comprend un module de déclenchement avant (31) et un module de déclenchement inverse (32) ;
le module de déclenchement avant est configuré pour activer les modules de commutation de charge des n modules de disjoncteur lors de l'apparition d'un défaut avant ; et
le module de déclenchement inverse est configuré pour activer des modules de commutation de charge inverse des n modules de disjoncteur lors de l'apparition d'un défaut inverse.

11. Disjoncteur pour courant continu à haute tension selon la revendication 2, dans lequel :
le module de commutation de charge comprend un module de commutation de charge avant (121) et un module de commutation de charge inverse (123) connecté en parallèle au module de commutation de charge avant ;
le module de commutation de charge avant est configuré pour produire un courant inverse dans le circuit de branche de commutation pour effectuer l'extinction par passage à zéro des commutateurs mécaniques après l'apparition d'un défaut avant ;
le module de commutation de charge inverse est configuré pour produire un courant inverse dans le circuit de branche de commutation pour effectuer l'extinction par passage à zéro des commutateurs mécaniques après l'apparition d'un défaut inverse ;
le module de déclenchement comprend un module de déclenchement avant (31) et un module de déclenchement inverse (32) ;
le module de déclenchement avant est connecté au module de commutation de charge avant et configuré pour activer le module de commutation de charge avant lors de l'apparition d'un défaut avant ; et
le module de déclenchement inverse est connecté au module de commutation de charge inverse et configuré pour activer le module de commutation de charge inverse lors de l'apparition d'un défaut inverse.

12. Disjoncteur pour courant continu à haute tension selon la revendication 3, dans lequel :
le module de commutation de charge comprend un module de commutation de charge avant (121) et un module de commutation de charge inverse (123) connecté en parallèle au module de commutation de charge avant;
le module de commutation de charge avant est configuré pour produire un courant inverse dans le circuit de branche de commutation pour effectuer l'extinction par passage à zéro du commutateur mécanique après l'apparition d'un défaut avant ;
le module de commutation de charge inverse est configuré pour produire un courant inverse dans le circuit de branche de commutation pour effectuer l'extinction par passage à zéro du commutateur mécanique après l'apparition d'un défaut inverse ;
le module de déclenchement comprend un module de déclenchement avant (31) et un module de déclenchement inverse (32);
le module de déclenchement avant est connecté à des modules de commutation de charge avant des n modules de disjoncteur et configuré pour activer les modules de commutation de charge avant lors de l'apparition d'un défaut avant ;
le module de déclenchement inverse est connecté à des modules de commutation de charge inverse des n modules de disjoncteur et configuré pour activer les modules de commutation de charge inverse lors de l'apparition d'un défaut inverse.

13. Disjoncteur pour courant continu à haute tension selon la revendication 4, dans lequel :
le module de commutation de charge comprend un module de commutation de charge avant (121) et un module de commutation de charge inverse (123) connecté en parallèle au module de commutation de charge avant ;
le module de commutation de charge avant est configuré pour produire un courant inverse dans le circuit de branche de commutation pour effectuer l'extinction par passage à zéro des commutateurs mécaniques après l'apparition d'un défaut avant ;
le module de commutation de charge inverse est configuré pour produire un courant inverse dans le circuit de branche de commutation pour effectuer l'extinction par passage à zéro des commutateurs mécaniques après l'apparition d'un défaut inverse ;
le module de déclenchement comprend un module de déclenchement avant (31) et un module de déclenchement inverse (32) ;
le module de déclenchement avant est connecté au module de commutation de charge avant et configuré pour activer le module de commutation de charge avant lors de l'apparition d'un défaut avant ; et
le module de déclenchement inverse est connecté au module de commutation de charge inverse et configuré pour activer le module de commutation de charge inverse lors de l'apparition d'un défaut inverse.

14. Disjoncteur pour courant continu à haute tension selon l'une quelconque des revendications 6 à 13, dans lequel:
le module de commutation de charge avant comprend un premier réacteur de couplage, un premier condensateur de couplage C2 et un premier circuit de courant de suivi, lequel est connecté en parallèle au premier condensateur de couplage C2 ;
un côté secondaire du premier réacteur de couplage (11) est connecté en série au condensateur de commutation ; une extrémité d'un côté primaire du premier réacteur de couplage est mise à la terre par le biais du premier condensateur de couplage C2, et l'autre extrémité du côté primaire du premier réacteur de couplage est connectée au module de déclenchement avant ; et
le premier circuit de courant de suivi comprend une diode et une résistance connectées en série ; une anode de la diode est connectée au premier condensateur de couplage C2, et une cathode de la diode est connectée en série à la résistance R1.

15. Disjoncteur pour courant continu à haute tension selon l'une quelconque des revendications 6 à 13, dans lequel :
le module de commutation de charge inverse comprend un deuxième réacteur de couplage, un deuxième condensateur de couplage C2 et un deuxième circuit de courant de suivi, lequel est connecté en parallèle au deuxième condensateur de couplage C2 ;
un côté secondaire du deuxième réacteur de couplage (11') est connecté en série au condensateur de commutation ; une extrémité d'un côté primaire du deuxième réacteur de couplage est mise à la terre par le biais du deuxième condensateur de couplage C2, et l'autre extrémité du côté primaire du deuxième réacteur de couplage est connectée au module de déclenchement inverse ; et
le deuxième circuit de courant de suivi comprend une diode et une résistance connectées en série ; une cathode de la diode est connectée au deuxième condensateur de couplage C2, et une anode de la diode est connectée en série à la résistance R1.

16. Disjoncteur pour courant continu à haute tension selon l'une quelconque des revendications 1 à 15, dans lequel le module de déclenchement, ou le module de déclenchement inverse, comprend un thyristor G2 et une diode D2 reliés en parallèle.

17. Disjoncteur pour courant continu à haute tension selon l'une quelconque des revendications 1 à 15, dans lequel le module de déclenchement, le module de déclenchement avant, ou le module de déclenchement inverse, comprend un éclateur T.
